# EUROPEAN PATENT APPLICATION

(11) **EP 2 998 904 A1**
(43) Date of publication of application: **23.03.2016**
(21) Application number: 15186184.6
(22) Date of filing: 22.09.2015
(51) Int. Cl.: G06F 21/81

(54) **SYSTEM AND METHOD FOR ENERGY MANAGEMENT OF MOBILE DEVICES**

(30) Priority: 22.09.2014 US 201462053730 P; 19.11.2014 US 201462081611 P
(71) Applicant: Nation E Ltd., 4654810 Herzlia (IL)
(72) Inventor: JAMMER, Daniel, 46548410 Herzlia (IL)
(74) Representative: Harrison IP Limited

(57) **Abstract**

A system for energy management of at least one mobile device, comprising: a local manager; and at least one energy providing component in communication, in which the at least one energy providing component and the at least one local manager are embedded in the at least one mobile device, wherein the at least one energy providing component provides energy to the at least one device; wherein the at least one local manager intercepts and analyses all communications to or from the at least one energy providing component; wherein, following the interception and analysis, the at least one local manager blocks any malicious communication to or from the at least one energy providing component..

## Description

### FIELD OF THE INVENTION

The present invention relates generally to energy management and specifically energy disaster recovery and energy management of mobile devices.

### BACKGROUND OF THE INVENTION

Recently many disasters have occurred which caused widespread damage to physical infrastructure, including with regard to energy provision. Many of these disasters are weather induced, such as hurricanes and so forth, although man-made disasters (caused for example due to explosions, fires and other sources having a human origin) can also occur and are devastating. Cyber-attacks on energy infrastructure are also a looming threat with the potential to cause wide scale disruption of energy networks. Prior art solutions focus on threat detection and prevention based on information technology mechanisms such as antivirus or analysis of data network traffic. These solutions do not take into account behavioral changes in the energy network that may point to anomalies. It would be preferable to be able to predict such disruptions or disasters before they occur or at least identify that anomalous behavior has begun to appear.

Recovery from such disasters is frequently impeded by a lack of energy, particularly electricity, and the failure of the physical power grid. Unfortunately, back up energy systems are typically either absent or are insufficient to support disaster recovery.

As society also becomes increasingly dependent on data, lack of data (and lack of data backup and recovery) is also an increasing problem for disaster recovery. Piecemeal solutions have been implemented, but broader data control and recovery methods and systems are not currently available. Society has also become dependent on mobile devices, such as smartphones, tablets, laptops, or any mobile computing device such as in automotive management. These devices are in turn highly dependent on the energy sources - mainly batteries - that power them and provide for their mobility. Here to, the potential for cyber-attacks is recognized but the vulnerability of the mobile energy components is not fully appreciated. As with energy distribution networks, attempts to prevent cyber threats focus on information technology mechanisms such as antivirus or analysis of data network traffic rather than on behavioral changes in the energy usage of the device. Further, these current mechanisms may analyze and protect those applications and associated communications ports related to common user activity such as email, voice and video calling, social media, or Internet browsing - while failing to protect communications or interactions related to the underlying energy supply of the device.

Thus, there is an urgent need to provide control and backup electricity production methods and systems, as well as backup data methods and systems. This need includes the ability to quickly detect energy anomalies on a network-wide scale as well as on a per-device scale.

### Summary of the invention

The background art does not teach or suggest a system or method for back-up provision of electricity and for risk management of the provision of electricity and optionally also for data, both analysis and backup.

Data analysis and backup may also optionally relate to energy data, including with regard to monitoring the grid to determine historical data, for example including but not limited to voltage, amperage, tampering, reduced power. Such information also relates to determining the total amount of energy consumed by various units, such as buildings, houses, complexes of buildings, a street or other group of such buildings and so forth. These units may also be of a smaller scale such as mobile devices or other devices with dependency on a self-contained energy supply. Non-limiting examples of such mobile devices include laptops, smartphones, or cellphones. A further type of unit discussed herein is an electric vehicle dependent on a self-contained rechargeable energy source. Such information is important for the risk management system. However, the background art does not relate to any of these important aspects for energy data management and monitoring.

According to at least some embodiments of the present invention, there is provided a system and method for energy and also optionally also IT and energy data backup and disaster recovery support, comprising grid-wide communication by a central manager, a plurality of local managers and a plurality of energy providing components, in which at least one energy providing component comprises a smart local energy installation and at least one energy providing component comprises an intelligent mobile energy vehicle. Energy providing components may also comprise batteries, battery management systems (BMS), or renewable energy sources and may be contained within the units receiving energy or may be separate from these.

According to at least some embodiments, the grid is monitored to determine historical data, for example including but not limited to voltage, amperage, tampering, reduced power. Such information also relates to determining the total amount of energy consumed by various units, such as buildings, houses, complexes of buildings, a street or other group of such buildings and so forth as well as mobile devices or vehicles as noted above. Optionally and preferably such information is analyzed and monitored by a risk management system as described herein, which may also optionally comprise a central monitoring facility for monitoring the grid, local energy installations, mobile devices, and also intelligent mobile energy vehicles. Such a central monitoring facility may optionally comprise a hierarchy of a plurality of such monitors.

The central manager is able to monitor the activities of the local managers and through them, of the local energy providing components, which as described in greater detail below may optionally be mobile or non-mobile, although preferably both mobile and non-mobile energy providing components are provided. Each energy providing component is able to provide power to a power receiver, which may optionally comprise a fixed installation such as a building for example or other permanent structure or a temporary fixed structure for example; the power receiver may also optionally comprise a mobile device such as a laptop or smartphone or may comprise a vehicle for example. The mobile energy providing components are preferably able to provide power to both fixed installations and mobile devices and vehicles.

The local managers are also preferably able to monitor the activities of energy providing components under their control and also are preferably able to detect any failures. For example, the local managers may optionally and preferably determine whether a localized energy providing component failure has occurred, but are also preferably able to determine whether a grid power failure has occurred. Local managers may also determine whether a cyber-attack is being perpetrated against the energy providing component that they are monitoring based on changes in energy behavior. Alternatively local managers monitor all communication to the energy providing components and determine whether the communications in either direction represents a risk to the energy providing components or any part of the systems or subsystems that are contained within the energy providing component or the greater network.

The local managers also preferably store a history of energy usage and also transfer this history to the central manager. This history forms the basis for assessing whether the current energy status is anomalous thus allowing prediction of impending failure or attempts to disrupt the behavior of the network or device.

In cases where local managers or central manager have determined that a failure has occurred or may occur or that a cyber-attack is occurring or was attempted, either central manager or local managers may take action to prevent the potential damage or further damage caused by the failure or attack.

If the energy providing components are able to detect excess heat or moisture, or the presence of natural gas (potentially indicating a broken gas pipe) or other problematic conditions, then such information may be passed to the local managers. Additionally or alternatively, an energy providing component may be optionally be able to monitor the normal operation of such infrastructure and to report any deviation from such normal operation, including but not limited to an increase or reduction in the availability of electricity, whether through the grid or through local production; an increase or reduction in water flow or pressure, or in natural gas flow or pressure; an increase or reduction in temperature above or below normal thresholds (which may for example indicating the presence of fire or of freezing conditions); and the like.

A specific local manager may then optionally determine that an alarm is to be sent to the central manager; depending upon the nature of the alarm, the location of the energy providing component and also whether a plurality of such components report an alarm condition, the local manager may be able to determine the type of emergency situation that is occurring and how widespread the emergency situation is. Either the local manager, the central manager or a combination of both may therefore act as a gateway for energy management and control.

Preferably, the system comprises one or more grid components, such as a power substation and/or a power plant for example.

Optionally and more preferably the smart local energy installation comprises one or more of a power substation, a grid power plant, a renewable power farm or a battery and BMS. Optionally the power substation, the grid power plant or the battery may be combined with a renewable power source.

According to at least some embodiments there is provided a system for disaster recovery, comprising a central manager, a plurality of local managers and a plurality of energy providing components in communication, in which at least one energy providing component comprises a smart local energy installation and at least one energy providing component comprises an intelligent mobile energy vehicle, wherein the plurality of energy providing components provide disaster recovery for energy and for data, wherein the plurality of local managers manage the plurality of energy providing components for energy distribution and wherein the central manager manages the plurality of local managers.

Optionally the plurality of local managers monitor the plurality of energy providing components to determine an energy status of each energy providing component, wherein the energy status comprises a level of energy available through the energy providing component and a level of energy being drawn from the energy providing component, wherein at least one energy providing component comprises an electrical grid and wherein the energy status for the electrical grid comprises a combination of the level of available energy, the level of energy being drawn from the energy providing component and smoothness of the energy.

Optionally the plurality of local managers retain historical data for the energy status of each energy providing component and wherein the plurality of local managers analyze the historical data to determine whether a current energy status represents a deviation from the historical data.

Optionally, the plurality of local managers each comprises a risk analysis module adapted to determine whether an emergency is occurring or is likely to occur in the future based on the energy status of each energy providing component.

Optionally the plurality of local managers transmit the historical data for the energy status of each energy providing component to the central manager, and wherein the central manager analyzes the historical data to determine whether a current energy status represents a deviation from the historical data.

Optionally, the plurality of local managers determine that communication with the central manager is not available and the plurality of local managers store the historical data until communication with the central manager is restored and following the restoring of communication transmit the historical data to the central manager.

Optionally, the central manager provides the historical data to external resources, wherein external resources perform at least one of: requesting the historical data from the central manager; or providing instructions for the management of the plurality of local managers by the central manager.

Optionally, the plurality of local managers compare the energy status of each energy providing component to a profile that specifies normal behavior of each energy providing component to determine whether the energy status represents a deviation from the normal behavior.

Optionally, the plurality of local managers transmit the energy status of each energy providing component to the central manager and the central manager compares the energy status to a profile that specifies normal behavior of each energy providing component to determine whether the energy status represents a deviation from the normal behavior. Optionally, the central manager comprises a data analytics component for performing comparison to the profile. Optionally, the plurality of local managers authenticates the source of the energy available through the energy providing components.

Optionally the plurality of energy providing components further comprises a plurality of fixed local energy installations, wherein the fixed local energy installations detect one or more of excess heat, excess cold, excess moisture, a presence of natural gas, increased natural gas pressure in a natural gas pipe, decreased natural gas pressure in the natural gas pipe, increased water pressure in a water pipe or decreased water pressure in the water pipe; or seismic activity, and to report such a detected condition to one or more local managers. Optionally, one or more local managers each comprises a risk analysis module adapted to determine whether an emergency is occurring or is likely to occur in the future based on the detected conditions.

Optionally each fixed local energy installation reports to a specific local manager.

Optionally one or both of the local managers or the fixed local energy installation retains historical data regarding the detected condition, and compares a current detected condition to the historical data to determine whether there is a deviation.

Optionally the plurality of local managers transmit the historical data for the detected condition to the central manager, and wherein the central manager analyzes the historical data to determine whether a current detected condition represents a deviation from the historical data. Optionally, the data analytics component performs analysis of the historical data.

Optionally the fixed local energy installations monitor local energy consumption, local energy provision or a combination of both, and submit an alarm to the local managers if a deviation is detected.

Optionally, the fixed local energy installations or the plurality of local managers submit the alarm to the central manager and following receipt of an alarm from the local managers, the central manager queries local managers that are geographically nearby the local managers to determine the potential for alarm conditions at the nearby local managers.

Optionally the fixed local energy installation comprises one or more of a battery, a local connection to an electricity grid or a renewable energy source.

Optionally the fixed local energy installation comprises the battery and a battery management system.

Optionally the local connection to the electricity grid comprises a power substation, a mains connection or both.

Optionally a renewable energy source comprises one or more solar panels, one or more windmills, one or more geothermal connections or one or more hydropower connections.

Optionally each local manager determines a total amount of energy currently being consumed in a geographical area according to reports of energy consumption from the fixed local energy installations.

Optionally the central manager determines a total amount of energy currently being consumed in a geographical area according to reports of energy consumption from the local managers.

Optionally at least one of the fixed local energy installations or the local managers monitors local energy consumption to determine whether an alarm should be issued if a deviation is detected.

Optionally at least one of the fixed local energy installations or the local managers monitors detected conditions to determine whether an alarm should be issued if a deviation is detected.

Optionally, at least one of the fixed local energy installations or the plurality of local managers determines that an alarm should be issued and issues the alarm to the central manager.

Optionally the fixed local energy installation monitors the status of physical infrastructure and determines a status of the physical infrastructure for transmitting at least one of energy, water, gas or liquid fuel based on the monitoring. Optionally the monitoring comprises authenticating the data received from the physical infrastructure.

Optionally the data backup comprises energy data backup and IT data backup.

Preferably, the communication between the central manager and the plurality of local managers is encrypted.

Optionally, the plurality of local managers authenticate and monitor communication with the central manager for anomalous or unexpected instructions or requests and wherein the plurality of local managers discontinue communication with the central manager if anomalous or unexpected instructions or requests are detected.

Optionally, the central manager provides a demand forecast estimate based upon collected data from one or more of the plurality of local managers.

According to at least embodiments of the present invention, there is provided a method for disaster recovery, comprising backing up data; analyzing at least energy use and/or delivery to determine one or more energy parameters; if the one or more energy parameters fall outside of a normal range, sounding an alarm; and if necessary, providing energy and/or data backup to recover.

According to at least embodiments of the present invention, there is provided a system for energy management of at least one mobile device, comprising: a central manager, at least one local manager; and at least one energy providing component in communication, in which the at least one energy providing component and the at least one local manager are embedded in the at least one mobile device, wherein the at least one energy providing component provides energy to the at least one device; wherein the at least one local manager monitors the at least one energy providing component to determine an energy status of the at least one energy providing component, wherein the at least one local manager retains historical data for the energy status of the energy providing component and wherein the at least one local manager analyzes the historical data to determine whether a current energy status represents a deviation from the historical data or wherein the at least one local manager transmits the current energy status and the historical data to the central manager, and wherein the central manager analyzes the historical data to determine whether a current energy status represents a deviation from the historical data.

Preferably, the at least one energy providing component comprises a battery and a battery management system. Preferably, the at least one local manager intercepts and analyses all communications to or from the at least one energy providing component. Preferably, the at least one local manager blocks any malicious communication to or from the at least one energy providing component.

According to at least embodiments of the present invention, there is provided a system for energy management of at least one mobile device, comprising: a local manager; and at least one energy providing component in communication, in which the at least one energy providing component and the at least one local manager are embedded in the at least one mobile device, wherein the at least one energy providing component provides energy to the at least one device; wherein the at least one local manager intercepts and analyses all communications to or from the at least one energy providing component; wherein, following the interception and analysis, the at least one local manager blocks any malicious communication to or from the at least one energy providing component; wherein the communication may come from an application on the device or may originate from a source not on the device.

Preferably, the at least one local manager monitors the at least one energy providing component to determine an energy status of the at least one energy providing component. wherein the monitoring comprises one or more of determining an activity status; whether an alarm condition exists; determining an amount of energy provided by the energy providing component; determining charging and discharging status of the energy providing component, and recording behavior of the energy providing component. Preferably, the at least one local manager determines that the energy status represents an alarm condition or attack on the energy providing component. Preferably, following determining an alarm condition or an attack, the local manager takes action to protect the energy providing component.

Preferably, the system further comprises a central manager and wherein the local manager reports the alarm or the attack to one or both of the central manager and/or to the owner and/or user of the mobile device. Optionally, the communication between the central manager and the at least one local manager is encrypted. Optionally, the communication between the central manager and the at least one local manager uses the communications networks supported by the mobile device.

Preferably, the at least one local manager retains historical data for the energy status of the energy providing component and wherein the at least one local manager analyzes the historical data to determine whether a current energy status represents a deviation from the historical data. Preferably, the at least one local manager transmits the current energy status and the historical data to the central manager, and wherein the central manager analyzes the historical data to determine whether a current energy status represents a deviation from the historical data.

Optionally, the at least one energy providing component comprises a battery and a battery management system. Optionally, the embedding of the local manager comprises at least one of: embedding in the hardware of the device; embedding code in the operating system of the the device; or embedding an application running on the device. Optionally, the mobile device detects local environmental conditions using the sensors built into the device and provides information about the environmental conditions to the local manager or central manager. Optionally, the mobile device comprises at least one of a laptop, smartphone, cellphone or vehicle.

According to at least embodiments of the present invention, there is provided a method for energy management of at least one mobile device, comprising: providing a local manager; and at least one energy providing component in communication, wherein the at least one energy providing component and the at least one local manager are embedded in the at least one mobile device, wherein the at least one energy providing component provides energy to the at least one device; intercepting and analyzing by the at least one local manager of all communications to or from the at least one energy providing component; and blocking by the local manager of any malicious communication to or from the at least one energy providing component.

By "grid power plant" it is meant a power plant that operates on coal or another solid fuel; diesel, biofuel or another liquid fuel; or gas or another fluid fuel; with the proviso that the fuel or other source of energy for the power plant is not renewable as described below.

By "renewable power source" it is meant a power source that relies on a renewable source of energy, including but not limited to solar, wind, hydro, geothermal, biomass or biofuel.

By "renewable power farm" it is meant a renewable energy source that is capable of providing at least one MW (megawatt) of electrical power, including but not limited to a hydropower installation (such as a dam for example), a geothermal installation, a biomass installation, a solar farm comprising a plurality of solar power units or a wind farm comprising a plurality of wind power units.

The terms app, application, software, or client are used interchangeably herein to refer to the software running on a computing device. The term cyber-attack as used herein may refer to any security attack on the systems described herein by a party intent on damaging or disrupting the functioning of any of these systems by manipulating existing hardware and/or software, or adding new hardware and/or software.

Unless otherwise defined, all technical and scientific terms used herein have the same meaning as commonly understood by one of ordinary skill in the art to which this invention belongs. The materials, methods, and examples provided herein are illustrative only and not intended to be limiting.

Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

Although the present invention is described with regard to a "computing device", a "computer", or "device", or "mobile device" on a "computer network" or simply "network", it should be noted that optionally any device featuring a data processor and the ability to execute one or more instructions may be described as a computer or one of the interchangeable terms listed above, including but not limited to any type of personal computer (PC), a server, a cellular telephone, an IP telephone, a smartphone, a PDA (personal digital assistant), or a pager. Any two or more of such devices in communication with each other may optionally comprise a "network".

### Brief description of the drawings

The invention will now be described in connection with certain preferred embodiments with reference to the following illustrative figures so that it may be more fully understood. With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
FIG. 1A is a schematic block diagram showing an illustrative embodiment of a system for energy management according to at least some embodiments of the present invention;
FIG. 1B is a schematic block diagram showing an illustrative embodiment of a system for energy management where energy providing components optionally communicate with a plurality of local managers according to at least some embodiments of the present invention;
FIG. 1C is a schematic block diagram showing an illustrative embodiment of a system for energy management where local managers are embedded within mobile devices according to at least some embodiments of the present invention;
FIG. 2A is a schematic block diagram showing an illustrative embodiment of energy providing component 106 of Figures 1A-1C in which all communications from energy providing components 106 pass through local manager 104, according to at least some embodiments of the present invention;
FIG. 2B is a schematic block diagram showing an illustrative embodiment of a local configuration in which communication is arranged with local manager communicating with a plurality of intelligent mobile energy vehicles, which in turn communicate with a plurality of smart local energy installations, according to at least some embodiments of the present invention;
FIG. 2C is a schematic block diagram showing an illustrative embodiment of a local configuration 200, in which certain energy providing components communicate directly with each other as well as with a local manager, according to at least some embodiments of the present invention;
FIG. 2D shows a schematic block diagram of an extended version of the above systems, including a description of how they interact with central manager 102, according to at least some embodiments of the present invention;
FIG. 3 is a schematic block diagram showing a smart local energy installation 202, in accordance with a detailed embodiment of the present invention;
FIG. 4 is a schematic block diagram showing a local manager 104, in accordance with a detailed embodiment of the present invention;
FIG. 5 shows a schematic block diagram of another illustrative embodiment of a system for managing electricity provision according to the present invention;
FIG. 6 shows an exemplary, illustrative method for operating the system according to Figures 1 and/or 2E according to at least some embodiments of the present invention;
FIG. 7 relates to an exemplary, illustrative method for complete disaster recovery, including both energy and data recovery, according to at least some embodiments of the present invention;
FIG. 8 relates to an exemplary, illustrative method for disaster assessment, according to at least some embodiments of the present invention;
FIG. 9 relates to an exemplary, illustrative method for local disaster recovery, according to at least some embodiments of the present invention; and
FIG. 10 relates to an exemplary, illustrative method for analysis of historical data to indicate a potential disaster, according to at least some embodiments of the present invention.
FIG. 11 is a simplified pictorial illustration showing a system for tracking, locating and recharging electric vehicles, in accordance with some demonstrative embodiments of the invention.
FIG. 12A is a simplified block diagram showing further details of an intelligent mobile energy vehicle, in accordance with some embodiments of the present invention;
FIG. 12B relates to an exemplary, illustrative method for fast charging or discharging of an electric vehicle, in which the fast charging or discharging is directed by a the central manager;
Figure 13 shows an exemplary, illustrative system for collection of data by the gateway 232 (of Figure 2D) from a range of power sources;
Figure 14 is a non-limiting simplified pictorial illustration describing an energy management system 1400 through the interaction of several of the systems described herein;
Figure 15 shows a schematic block diagram which is a simplified software topology 1500, of the gateway 232 or local hub 234, shown as connected to a computer (terminal), according to at least some embodiments of the present invention; and
Figure 16 is a simplified functional software architecture, according to at least some embodiments of the present invention.

In all the figures similar reference numerals identify similar parts.

### DETAILED DESCRIPTION OF PREFERRED EMBODIMENTS

In the detailed description, numerous specific details are set forth in order to provide a thorough understanding of the invention. However, it will be understood by those skilled in the art that these are specific embodiments and that the present invention may be practiced also in different ways that embody the characterizing features of the invention as described and claimed herein.

The present invention will be more fully understood from the following detailed description of the preferred embodiments thereof, taken together with the drawings.

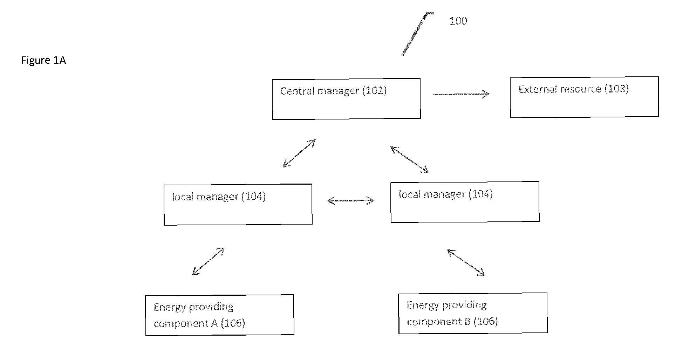

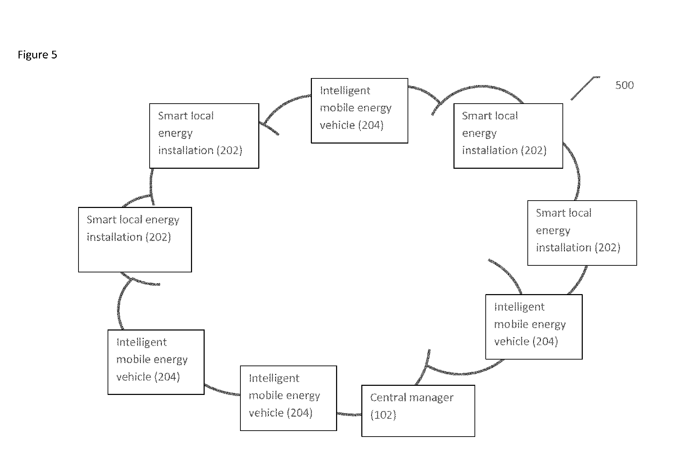

Reference is now made to Figures 1A-1C, which are schematic block diagrams showing different illustrative embodiments of a system for energy management according to the present invention (another illustrative, optional embodiment of such a system is shown with regard to Figure 5).

As shown in Figure 1A, a system 100 comprises a central manager 102, in contact with a plurality of local managers 104. Local managers 104 are also optionally in contact with each other as shown. Furthermore, each local manager 104 is in contact with an energy providing component 106, shown as energy providing component 106 A and energy providing component 106 B. Each of central manager 102, local managers 104 and energy providing components 106 is preferably addressable within a communication network, which may optionally be any suitable type of communication network as described below.

For the purpose of illustration, figure 1A shows only two local managers 104 and only two energy providing components 106. Preferably, any number of local managers 104 and energy providing components 106 may be provided based on the hierarchy shown.

Central manager 102 preferably monitors one or more activities of local managers 104, which in turn monitor one or more activities of energy providing component(s) 106 with which each such local manager 104 communicates. Such activities may optionally comprise one or more of determining an activity status (active or not active); whether an alarm condition exists (for example, whether a component such as local manager 104 or energy providing component 106 has failed); an amount of energy provided by energy providing component 106; charging and discharging status of the energy providing component 106, recording behavior of the energy providing component 106; and so forth.

Central manager 102 may also optionally direct local manager 104 to perform one or more activities, including providing data on the activity of local manager 104 and any managed energy providing component(s) 106; shutting itself down and/or shutting down one or more managed energy providing component(s) 106 (or alternatively powering up); increasing or decreasing provision of power by one or more managed energy providing component(s) 106; and so forth.

Local manager 104 may also optionally contact central manager 102 to initiate one or more of the above activities. Preferably, local manager may contact central manager 102 to report alarm conditions as further described below. Optionally local manager may contact central manager to report anomalous behavior that might indicate an impending failure or tampering such as in a cyber attack.

Central manager 102 may optionally also obtain information from one or more external resources 108, which may for example relate to external databases and the like. Optionally, central manager 102 may also provide data to external resources 108. Non-limiting examples of such data, as reported and collected by local managers 104 from energy providing components 106, include electricity usage data that may be used for billing purposes, alarm data that may be used to trigger the notification systems of local authorities, or indications of mobile device failure or tampering that can then be relayed to the owners or users of the device.

Optionally, external resources 108 may access central manager 102 for data requests or for configuration management of central manager 102 or any connected local manager 104 or energy providing component 106. Preferably, any interaction with external resources 108 requires authentication using measures as known in the art to prevent unwanted tampering with central manager 102 or any connected local manager 104 or energy providing component 106.

As described in greater detail below, energy providing components 106 provide power, whether through power generation, power storage, or a combination thereof. Optionally, each energy providing component 106 may be considered to be "smart" and has some independence in terms of local activities. However, in this embodiment, energy providing components 106 A and B are only in contact with a specific local manager 104, such that not all local managers 104 are able to communicate with all energy providing components 106. Local managers 104 may optionally communicate with each other directly or which alternatively may optionally pass communications through central manager 102 as shown.

Optionally, communications in system 100 are supported by various types of communication networks, including but not limited to a wired communication network, including but not limited to a PSTN (public switched telephone network) and/or other wired telephone and/or circuit-switched network, an optical communication network, a fiber-optic communication network and the like or RF network, and/or any combination of the aforesaid networks, which may optionally be private or public networks; and a wireless data network including but not limited to a cellular network, a WiMAX network, an EV-DO network, an RTT network, a Flash-OFDM network, an iBurst network, a HSPA network, an EDGE network, a GPRS network, a GPS satellite network, a Wi-Fi network, a UTMS network, and/or any combination of the aforesaid networks, which may optionally be private or public networks. Combinations of wired and wireless networks may also optionally be employed. Unless otherwise noted, any system as described herein may also optionally be supported through communications according to one or more of the above communication networks.

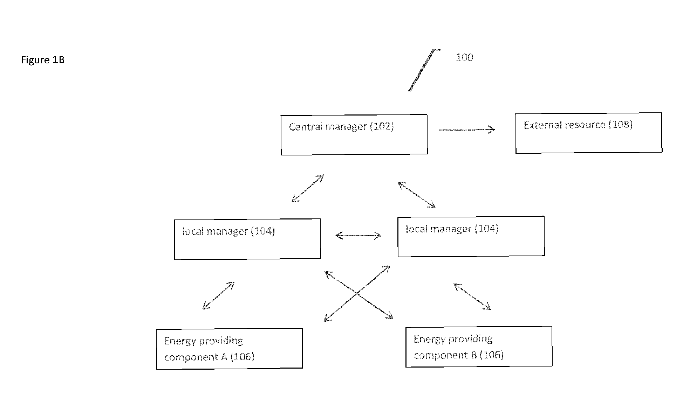

Figure 1B is similar to Figure 1A, in that the same or similar components are present, as indicated by the reference numbers; however, in this embodiment, energy providing components 106 A and B may optionally communicate with a plurality of local managers 104. The ability to communicate with a plurality of local managers 104 provides redundancy and enables each energy providing component 106 to maintain contact with a local manager 104, even if one or more such local managers 104 fails.

Preferably, all communication between the local managers 104 and the central manager 102 as well as local managers 104 and other local managers 104 are encrypted using cryptographic protocols know in the art including but not limited to Internet Key Exchange, IPsec, Kerberos, Point to Point Protocol, or Transport Layer Security.

For any of Figures 1A-1C, local managers 104 are also preferably able to monitor the activities of energy providing components 106 under their control and also are preferably able to detect any failures. For example, local managers 104 may optionally and preferably determine whether a localized energy providing component failure has occurred, but are also preferably able to determine whether a grid power failure has occurred.

Energy providing components 106 optionally provide information to other systems or allow manipulation of their functionality via communications interfaces and networks such as those described above. Preferably, local manager 104 also monitors all communication to or from energy providing components 106 and determines whether the communication should be allowed or blocked, such as communication that appears to be malicious or part of a cyber-attack designed to disable or damage all or part of energy providing components 106.

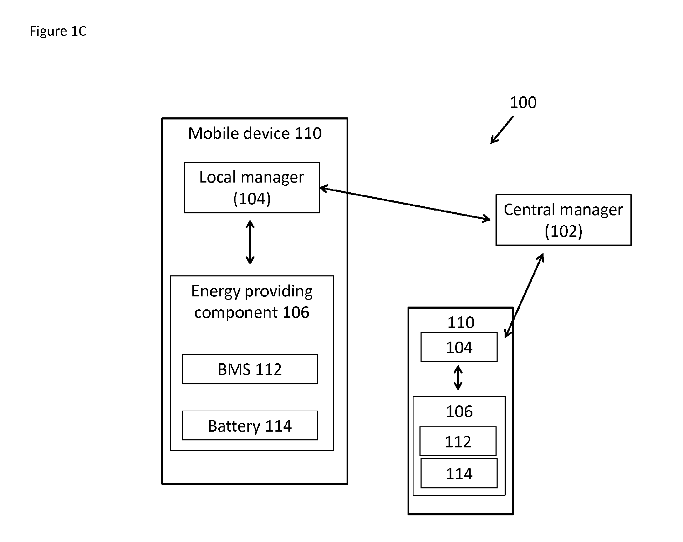

In the embodiment of figure 1C, local managers 104 are embedded within mobile devices 110. Local managers 104 may be optionally be embedded at a hardware level such as a microchip providing the functionality as described herein. Alternatively, the functionality of local manager 104 may be provided by code embedded in the operating system of the device 110 or an application running on device 110.

Only two devices are shown but it should be appreciated that the number of devices 110 with embedded local managers 104 is preferably limited only by hardware constraints related to the system components as shown. As in figures 1A and 1C, local managers 104 are in communication with central manager 102. This communication makes use of the networks as described above and may use the communications networks supported by the mobile device 110.

Mobile device 110 may be any device with dependency on a self-contained energy providing component 106. Non-limiting examples of such mobile devices include laptops, smartphones, cellphones or vehicles. Energy providing component 106 comprises a battery 114 to provide energy to device 110 and an associated battery management system (BMS) 112 for managing the functioning of battery 114 including: monitoring the battery parameters including charge level, temperature, and so forth; reporting the status of these parameters to device 110 and local manager 104 as well as applications (not shown) running on device 110, initiating and stopping charging of battery 114 when the presence of an external charging source (not shown) is connected.

Local manager 104 preferably monitors the status and activity of BMS 112 and battery 114 and can therefore preferably determine when an alarm condition or attack on the energy providing components 106 of device 110 is taking place. Local manager may then take action to protect energy providing component 106 or may report an alarm condition or potential for an alarm condition to central manager 102.

As above, local manager 104 preferably also monitors and analyses all communication to or from energy providing components 106 on device 110 to ensure that the communication does not pose a risk to the energy providing components 106, or the device 110 itself, or other applications or data on the device which might be threatened using an attack that starts with the energy providing components 106. The communication may come from an application on device 110 or may originate from an application or source not on device 110. Local manager 104 therefore preferably does not trust any application or component communicating with the energy providing component 106 and intercepts and analyses all communication. The communications may optionally use the embedded communication capabilities of device 110. Local manager 104 is therefore preferably embedded into device 110 such that all communication with energy providing component 106 passes through local manager 104.

Non-limiting examples of this communication include legitimate - such as an app running on the device or a cloud service that is requesting the current charge level; or malicious - such as communication aimed at causing the battery to discharge too quickly. Local manager 104 therefore preferably intercepts and blocks communication to or from energy providing component 106 whether to the BMS 112 or the battery 114, if this communication is deemed to be harmful. Additionally, when local manager 104 detects unwanted communication, it preferably notifies central manager 102.

Local managers 104 may optionally and preferably analyze incoming energy data from energy providing components 106 to determine whether such a localized energy providing component is at least behaving in a manner contrary to historical patterns. Alternatively the behavior of each type of energy providing component is defined by a profile that specifies expected behavior such that local managers can compare current behavior with the profile to detect anomalies. A non-limiting example of a profile could be based on the parameters provided by the manufacturer of the energy providing component 106 such as for a battery which might include the specified maximum operating temperature or charging times. Deviation from these parameters would constitute anomalous behavior.

Optionally, detection of anomalous or unexpected behavior may be based on a combination of both historical and profile analysis. Non-limiting examples of anomalous or unexpected behavior may include lowered or heightened activity, and/or exhibitions of spikes or unexpected peaks of energy (or the converse, sudden dips of energy), behavioral changes and/or sudden increases or decreases in charging or discharging rates, unexpected communication or instructions, and/or lack of smooth energy provision. In the embodiment of figure 1C, such a spike of energy might indicate an issue with battery 114. Such energy data is preferably analyzed to detect such a historical or behavioral anomaly. Optionally, such analysis is performed both locally and at a central monitoring facility, which may optionally comprise a hierarchy of such monitors (and which may also optionally include central manager 102) and which is described in greater detail below. Alternatively, analysis is only performed locally or is only performed by the central monitoring facility. The central monitoring facility may also optionally be implemented as central manager 102 and/or according to the below described embodiments.

If energy providing components 106 are able to detect excess heat or moisture, or the presence of natural gas (potentially indicating a broken gas pipe) seismic activity, or other problematic conditions, then such information may be passed to local managers 104. A mobile device such as mobile device 110 may optionally provide information about the environmental conditions detected using the sensors built into the device 100. Additionally or alternatively, energy providing component 106 may be optionally be able to monitor the normal operation of such infrastructure and to report any deviation from such normal operation, including but not limited to an increase or reduction in the availability of electricity, whether through the grid or through local production; an increase or reduction in water flow or pressure, or in liquid fuel or natural gas flow or pressure; an increase or reduction in temperature above or below normal thresholds (which may for example indicating the presence of fire or of freezing conditions); seismic activity, and the like. Such information may then optionally be reported to a specific local manager 104 or to a plurality of such local managers 104, according to the various embodiments of Figures 1A-1C.

One or more local managers 104 may then optionally determine that an alarm is to be sent to central manager 102; depending upon the nature of the alarm, the location of the relevant energy providing component 106 and also whether a plurality of such components 106 report an alarm condition, local manager 104 may be able to determine the type of emergency situation that is occurring and how widespread the emergency situation is. Similarly, according to the report(s) received by central manager 102 from one or more local managers 104, central manager 102 may optionally and preferably determine the type of emergency situation that is occurring and how widespread the emergency situation is.

Central manager 102 preferably includes a data analytics component (not shown) adapted to determine the current status of any connected component and also whether emergency situations or security threats such as cyber-attacks are occurring based on received status data as well historical data and optionally profiled system behavior.

Central manager 102 may also query local managers 104 that are near to a local manager 104 that has reported an alarm in order to determine the potential for alarm conditions to spread or arise at these local managers 104.

Local managers 104 may determine, based on the historical or profiled behavior of an energy providing component 106, that an alarm condition is not of sufficient severity to warrant reporting to the central manager 102 thus preventing unnecessary alerts from reaching central manager 102.

Preferably, local manager 104 continuously monitors the connection to central manager 102. Should a local manager 104 determine that communication to central manager 102 has been disrupted, then local manager preferably operates autonomously - collecting data from managed energy providing component(s) 106, analyzing the behavior of these components 106 to determine historical or profile-based anomalies, and taking steps to remedy alarm conditions such as shutting down one or more managed energy providing component(s) 106 (or alternatively powering up); increasing or decreasing provision of power by one or more managed energy providing component(s) 106; and so forth.

Optionally, a local operator (not shown) of local manager 104 may engage the autonomous mode of operation of local manager 104. Preferably, local manager 104 also authenticates communication with central manager 102 and analyzes this communication for anomalous or unexpected instructions or requests. If local manager 104 determines that the communications from central manager 102 are suspicious then local manager 104 preferably enters the autonomous mode described above.

Once communication with central manager 102 is restored and authenticated, local manager exits its autonomous mode and uploads all collected data to central manager 102 that was collected during the disrupted communication period. In this way central manager 102 preferably maintains a complete history of attached local managers 104 and energy providing component(s) 106.

Optionally, the central manager is able to provide a demand forecast estimate based upon collected data from one or more local managers.

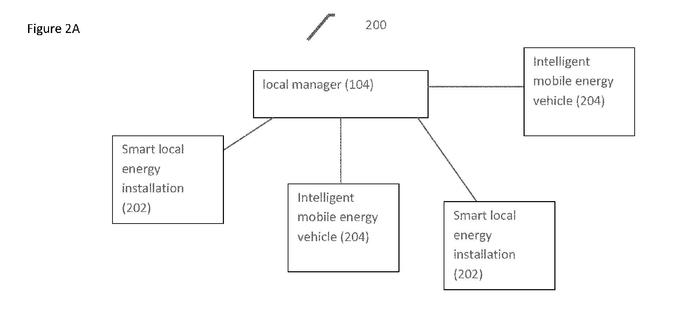

Optional contact between different energy providing components 106 according to various embodiments of the present invention is described in greater detail below with regard to Figures 2A-2D.

Figures 2A-2D are schematic block diagrams showing different illustrative embodiments of energy providing component 106 of Figures 1A-1C, in conjunction with local manager 104, according to the present invention. For Figures 2A-2D, two types of energy providing components 106 are shown: a smart local energy installation 202 and an intelligent mobile energy vehicle 204.

Smart local energy installation 202 may optionally comprises a non-mobile local energy installation, and may optionally comprise one or more of a power substation, a grid power plant, a renewable power farm or a battery. Alternatively, smart local energy installation 202 may comprise the energy providing component 106 of a mobile device such as device 110 of figure 1C further comprising a battery 114 and BMS 112 as shown. Optionally the power substation, the grid power plant or the battery may be combined with a renewable power source. The renewable power source is sized to match the installation or device.

Smart local energy installation 202 also optionally and preferably comprises a processor for processing data and for performing one or more commands, and a communication device for communicating with local manager 104 for example, although optionally the communication device may communicate with other components as described in greater detail below with regard to Figures 2A-2D.

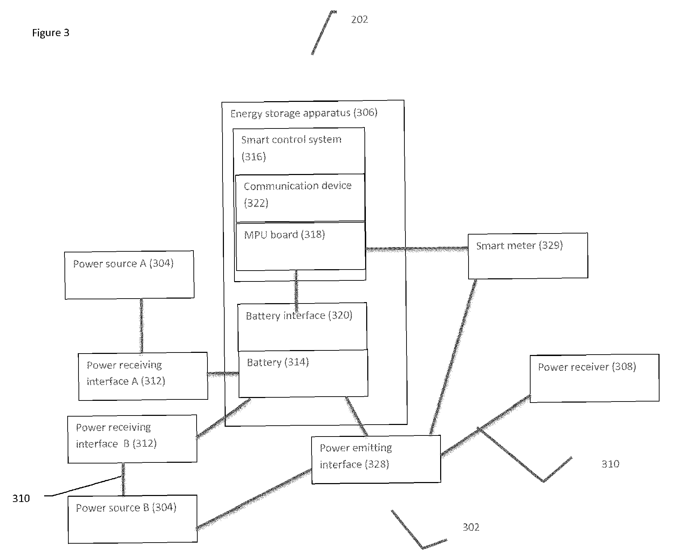

Non-limiting examples of such smart local energy installations 202 are shown with regard to figures 1C above and figure 3 below.

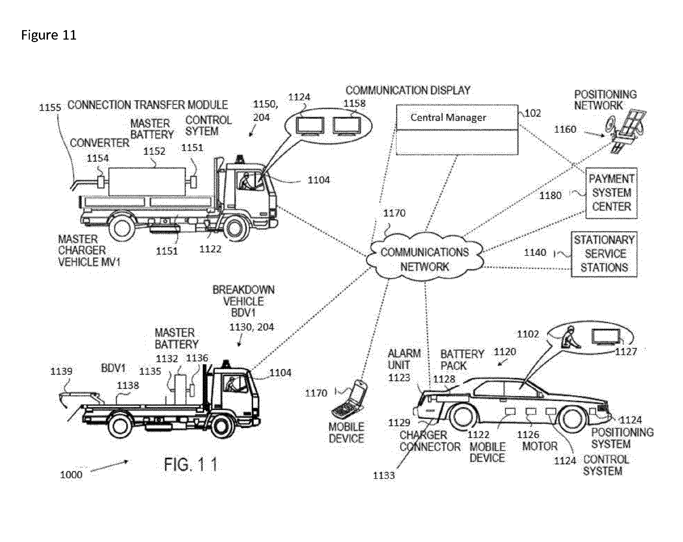

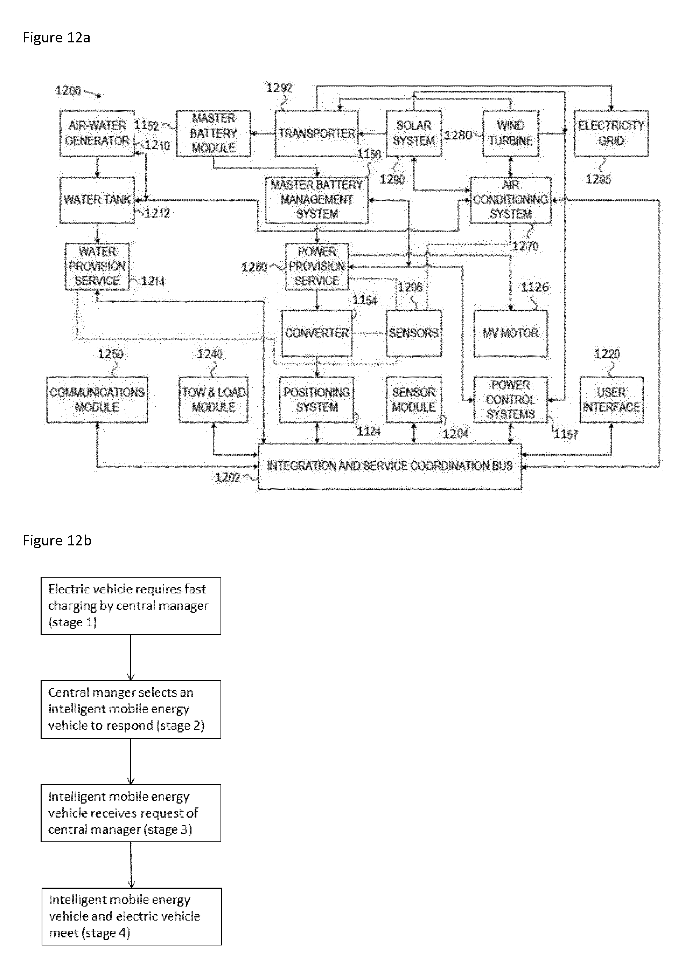

Intelligent mobile energy vehicle 204 is further described below with reference to figures 11, and 12A.

Each of smart local energy installation 202 or intelligent mobile energy vehicle 204 is able to provide power to a power receiver, which may optionally comprise a fixed installation such as a building for example or other permanent structure or a temporary fixed structure for example; the power receiver may also optionally comprise a mobile device such as device 110 or a vehicle for example as described in Figure 11 below. Intelligent mobile energy vehicles 204 are preferably able to provide power to both fixed installations and mobile devices or other vehicles. Smart local energy installations 202 may also optionally provide power to both fixed installations, mobile devices and vehicles.

Figure 2A shows an optional, illustrative embodiment of a local configuration 200, in which all communications from energy providing components 106 pass through local manager 104. In this configuration, each intelligent mobile energy vehicle 204 and each smart local energy installation 202 communicates only with local manager 104. Although this configuration allows local energy manager 104 to have greater control, it is disadvantageous in that in case of failure of local energy manager 104 (or as in the case of the embodiment of system 100 shown in Figure 1B, a plurality of local energy managers 104), no redundancy is provided to support communication between intelligent mobile energy vehicles 204 and smart local energy installations 202.

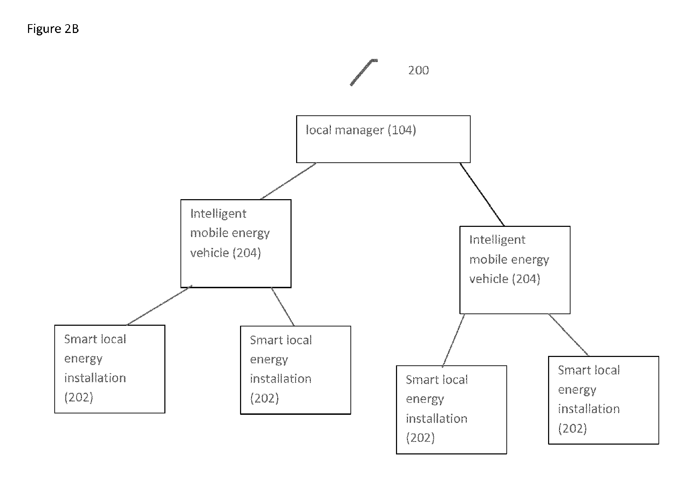

Figure 2B shows another optional, illustrative embodiment of a local configuration 200, in which communication is arranged in a different hierarchy, with local manager 104 communicating with a plurality of intelligent mobile energy vehicles 204, which in turn communicate with a plurality of smart local energy installations 202. As intelligent mobile energy vehicles 204 move around a geographical area, different intelligent mobile energy vehicles 204 may optionally communicate with different smart local energy installations 202 at different times. A plurality of intelligent mobile energy vehicles 204 would therefore form a "mobile communication cloud" which would have a number of advantages, including but not limited to the ability to swap communication components (intelligent mobile energy vehicles 204) in and out, according to the communication load, failures of specific intelligent mobile energy vehicles 204 and so forth. This configuration also does not require the construction of a fixed communication infrastructure between smart local energy installations 202 and local manager 104, as intelligent mobile energy vehicles 204 could for example optionally act as mobile "repeaters" or signal boosting devices. This configuration could also optionally be implemented in case of a failure of other types of communication networks, for example in the case of a natural disaster or terrorist attack. Alternatively, the embedded communications of devices such as device 110 could be used as repeaters for communication as described above.

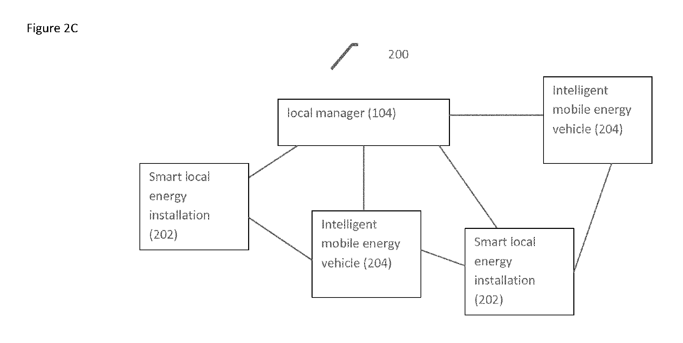

Figure 2C shows another optional, illustrative embodiment of a local configuration 200, in which certain energy providing components 106 communicate directly with each other as well as with local manager 104. In this configuration, intelligent mobile energy vehicles 204 communicate directly with each other, and smart local energy installations 202 communicate directly with each other; furthermore, smart local energy installations 202 also communicate directly with intelligent mobile energy vehicles 204. This configuration provides a great deal of flexibility in terms of the structure and implementation of the communication network supporting this configuration.

For each of the configurations of Figures 2A-2C, smart local energy installations 202 and intelligent mobile energy vehicles 204 are optionally able to provide different types of information to local manager 104. For example, optionally and without limitation, intelligent mobile energy vehicles 204 are able to provide information on road conditions, both in terms of regular use (traffic, condition of the road infrastructure in terms of potholes etc.) and also in terms of emergency conditions, such as natural disasters or terrorist attacks.

As another example, also optionally and without limitation, smart local energy installations 202 are able to report on local fixed infrastructure conditions, optionally and preferably including both normal operation of such infrastructure but also regarding failures or breakage of such infrastructure, as well as for emergency conditions, such as natural disasters or terrorist attacks. For example and without limitation, smart local energy installations 202 are able to monitor the normal operation of such infrastructure and to report any deviation from such normal operation, including but not limited to an increase or reduction in the availability of electricity, whether through the grid or through local production; an increase or reduction in water flow or pressure, or in liquid fuel or natural gas flow or pressure; an increase or reduction in temperature above or below normal thresholds (which may for example indicating the presence of fire or of freezing conditions); seismic activity and the like.

Optionally, smart local energy installations 202 authenticate the data received from monitored infrastructure or any other data received to verify that the source is genuine, to correlate the data with the expected data from the verified source, and to ensure that the data has not been tampered with.

Optionally, smart local energy installations 202 or local managers 104 verify the source of energy provided by an energy providing component. In a non-limiting example, energy that is supposed to be provided from a renewable source will be authenticated as having been generated from that source, as opposed to having been generated by another source such as a rechargeable battery powered by a grid. This prevents resale to a grid of energy that is supposed to be solely from a renewable source but which is actually augmented by a battery that has been powered and charged from the same grid. Preferably, the battery in this installation is charged solely from the renewable source or alternatively the percentage charged by the renewable source vs. the grid is known and is authenticated.

As described herein, the term "energy data" may also optionally be encompassed by the above types of infrastructure data, which is also preferably analyzed for deviations from historical patterns as described herein and which may also optionally be monitored by the central monitoring facility as described in greater detail below.

Both smart local energy installations 202 and intelligent mobile energy vehicles 204 preferably report normal operations, deviations from normal operation and emergency situations to local manager 104.

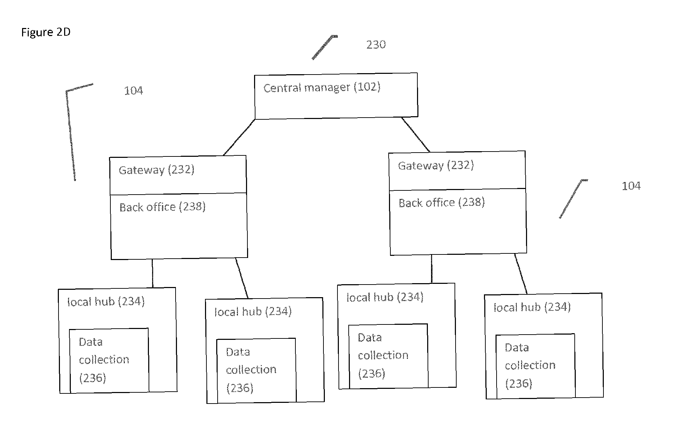

Figure 2D shows a schematic block diagram of an extended version of the above systems, including a description of how they interact with central manager 102, according to at least some embodiments of the present invention. As shown, a system 230 again features a local manager 104, but implemented as two separate components: a gateway 232 and a local hub 234. Each gateway 232 is shown as being in communication with a plurality of local hubs 234. Gateway 232 is also in communication with central manager 102. Each local hub 234 is in communication with energy providing components 106 as described in previous drawings (not shown).

Gateway 232 comprises a back office 238, which preferably includes data gathering and monitoring components. These data gathering and monitoring components, as described in greater detail below, may optionally also include data analysis functions. More preferably, these data gathering and monitoring components may provide an initial analysis and if necessary, an alarm if the analyzed data is outside of permitted normal ranges. Back office 238 also preferably handles any necessary communication with central manager 102. Back office 238 may also optionally comprise protocol translations (if necessary) and optionally communication encryption, in order to ensure a flow of information from energy providing components 106 to central manager 102. Gateway 232 may also optionally and preferably handle communications with one or more external components, such as external organizations, national authorities, other warning systems and so forth (not shown).

If back office 238 is implemented as a separate server (not shown), then preferably the data gathering and monitoring components are retained at gateway 232. Also optionally protocol translations may be retained at gateway 232.

As shown, gateway 232 is in communication with local hub 234, which preferably includes a data collection module 236. Data collection module 236 collects data from energy providing components 106, and may optionally perform an initial data analysis in order to determine whether an alarm should be immediately transmitted, again optionally and preferably because data is outside of permitted normal ranges as described below. The alarm may optionally be transmitted back to energy providing components 106 and/or to gateway 232. Furthermore, local hub 234 may optionally instruct one or more energy providing components 106 to perform some action on the basis of the analyzed data (for example, instructing a mobile component to move to a new location); alternatively or additionally, the need for such instructions may optionally be determined by gateway 232 but then transmitted by local hub 234.

Statistical analyses of the data are preferably performed and then compared to normal ranges, which are more preferably determined according to historical data (which as described in greater detail below, may optionally also relate to season, time of year, time of day, weather patterns and the like). These analyses may optionally be performed at each of local hub 234, gateway 232 and central manager 102, and then compared, with each increase in the level of the network hierarchy considering the data in view of information received over a broader portion of the network and/or from additional sources.

Local hub 234 may also optionally, additionally or alternatively, provide protocol translations for energy providing components 106 in order for energy providing components 106 to be able to communicate with each other. If direct communication from an outside component to energy providing components 106 is necessary (not shown), local hub 234 may also optionally provide protocol translations and/or act as a gateway for such communication to occur.

Local hub 234, gateway 232 and central manager 102 may optionally communicate according to a plurality of different protocols and/or through a plurality of different networks, including but not limited to computer networks, cellular telephone networks, fixed line (wired) networks, radio networks, satellite networks and so forth. Optionally, local hub 234 and energy providing components 106 communicate according to a particular type of network, while gateway 232 and central manager 102 may communicate through a different type of network including use of encrypted communication as described above, in which case gateway 232 preferably provides protocol translation services for these different networks.

As described in greater detail below, energy providing components 106 are preferably instructed to provide energy as needed, for example in case of a disaster. Energy providing components 106 may also optionally provide energy and IT data backup, also as described in greater detail below. If energy providing components 106 provide data backup, preferably at least restoration of data is provided to an installation; more preferably, both restoration of data and energy are provided to the installation as required, again for example in case of disaster. Furthermore, although the discussion in this application mainly relates to the analysis of energy use, optionally data use may also be analyzed, to be certain that data use and/or access to the computers or other hardware storing the data are also within acceptable limits, in an acceptable, range, which may optionally be determined at least partially through analysis of historical data.

Figure 3 is a schematic block diagram showing a non-limiting example of one implementation of a smart local energy installation 202, in accordance with a detailed embodiment of the present invention, comprising a battery (similar embodiments could also optionally be implemented with grid substations and power stations). As shown smart local energy installation 202 features a dual energy system 302, comprising at least one power source 304 as a first part of energy system 302 (of which a plurality of power sources A and B 304 are shown for the purpose of illustration only and without any intention of being limiting) and an energy storage apparatus 306 as a second part of energy system 302.

Each power source 304 is operatively connected to energy storage apparatus 306 through a power connection 310 and corresponding power receiving interface 312, of which a plurality of each (referenced in each case as A and B) are shown for the purpose of illustration only and without any intention of being limiting. Each power receiving interface 312 may optionally comprise any necessary conversion devices or any other required circuitry (not shown).

Each power receiving interface 312 is in turn operatively connected to a battery 314, which may optionally comprise a plurality of energy cells (not shown). Battery 314 may optionally comprise any suitable type of battery for example and without limitation, a battery from Kokam Battery (Kokam Company, Korea). For a house, battery 314 preferably comprises a suitable amount to support the electrical requirements of a house, such as for example and without limitation 16.5 kW. Battery 314 is optionally and preferably controlled by a smart control system 316, which comprises at least a MPU (master power unit) board 318. MPU board 318 optionally comprises a plurality of control components, more preferably including a processor for executing one or more commands. MPU board 318 is preferably able to command battery 314, for example through a battery interface 320.

MPU board 318 is optionally and preferably able to detect available power and the status of battery 314, as described in greater detail below. MPU board 318 is also optionally and preferably able to detect available power from power source B 304.

Optionally and preferably, MPU board 318 is in communication with a smart meter 329, which may optionally be co-localized with energy storage apparatus 306 or alternatively may optionally be in remote communication with energy storage apparatus 306 (not shown). Smart meter 329 is also optionally able to detect available power from power source B 304, either directly (not shown) or through communication with MPU board 318. Furthermore, smart meter 329 may also optionally control local provision of power as described in greater detail below; smart meter 329 may also optionally receive external commands regarding such control, as described in greater detail below. Smart meter 329 is also optionally able to control supply of power from an electric car (not shown), for example optionally to power receiver 308 and/or to power source B 304 (particularly if implemented as the electrical grid, as described in greater detail below).

Smart control system 316 may also optionally comprise a communication device 322, which is preferably in communication with a remote control center (not shown), through a remote communication channel (not shown). Communication device 322 may optionally include, for example, a wired or wireless Network Interface Card (NIC), a wired or wireless modem, a wired or wireless receiver and/or transmitter, a wired or wireless transmitter-receiver and/or transceiver, a Radio Frequency (RF) communication unit or transceiver, or other units able to transmit and/or receive signals, blocks, frames, transmission streams, packets, messages and/or data. Optionally, communication device 322 includes, or is associated with, one or more antennas, for example, a dipole antenna, a monopole antenna, an omnidirectional antenna, an end fed antenna, a circularly polarized antenna, a micro-strip antenna, a diversity antenna, or the like.

Each power source 304 supplies power to energy storage apparatus 306 but optionally not all power sources 304 supply power to a power receiver 308; as illustrated, only power source B 304 supplies power directly to power receiver 308. Power from power source B 304 is optionally and preferably provided through a power emitting interface 328, which may also optionally be the same power emitting interface 328 through which power is supplied to power receiver 308 from energy storage apparatus 306 as shown, although alternatively a different power emitting interface may be provided. Power emitting interface 328 is preferably connected to power receiver 308 through power connection C 310 as shown.

Power receiver 308 may optionally comprise any entity requiring power, whether a building or collection of buildings, including but not limited to a house, commercial building, hospital, prison or other institution; an installation requiring power, including but not limited to a refinery, a drilling platform, a boat, a plane, a factory and so forth; or an apparatus requiring power. In the illustrative embodiment shown, either power source B 304 or energy storage apparatus 306 may supply power directly to power receiver 308, while power source A 304 does not supply power directly to power receiver 308.

For example and without limitation, power source A 304 may optionally comprise a renewable non-fuel source of power, including but not limited to a wind turbine, a solar power installation, a hydropower installation, a geothermal installation and the like.

For example and without limitation, power source B 304 may optionally comprise grid power, power from a fuel based generator (whether diesel, "biofuel" or the like) and the like. By "grid" it is meant the electrical power grid which connects power generation plants at utilities to entities that receive power such as power receiver 308.

In some embodiments, some or all of the components of energy storage apparatus 306 may be enclosed in a common housing or packaging, and may be interconnected or coupled or operably associated using one or more wired or wireless links. In other embodiments, components of smart local energy installation 202 may be distributed among multiple or separate devices or locations, may be implemented using a client/server configuration, may communicate using remote access methods, or the like.

For embodiments without smart meter 329, and optionally also for embodiments with smart meter 329, MPU board 318 is optionally and preferably able to detect available power from power source B 304. In case of an unplanned outage, reduction in electricity or reduction in the quality of supplied electricity (for example and without limitation, "spikes" or "troughs" in energy level, particularly with regard to higher than desired or permitted variability), MPU board 318 is optionally and preferably able to switch power provision for power receiver 308 from power source B 304 to energy storage apparatus 306. MPU board 318 is optionally able to control power emitting interface 328, to determine how power is supplied to power receiver 308. MPU board 318 is also optionally and preferably able to detect available power and the status of battery 314, for example to determine whether power is received from power source A 304 (optionally to supply power to battery 314).

For example and without limitation, if power receiver 308 is a home, and there is an unexpected cut in power availability or quality, then MPU board 318 is preferably able to detect this status and to quickly shift power supply from power source B 304 to energy storage apparatus 306. Such a quick independent shift means that the home (power receiver 308) is able to maintain a smooth uninterrupted power supply, preferably without undesired spikes or other potentially problematic electricity delivery problems. These functions may also optionally be provided, additionally or alternatively, through smart control system 316.

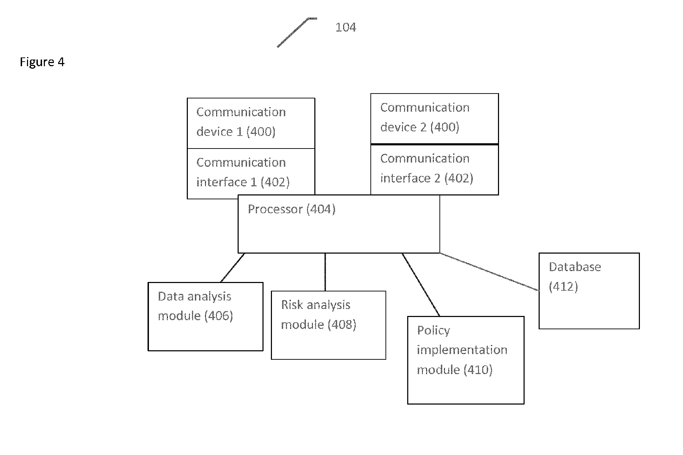

Figure 4 is a schematic block diagram showing a local manager 104, in accordance with a detailed embodiment of the present invention, which preferably features the ability to communicate on a plurality of redundant channels (for example with energy providing components, other local managers and/or central manager), and to receive and analyze data (again for example from energy providing components, other local managers and/or central manager).

Local manager 104 preferably comprises a plurality of communication devices 400, shown as communication devices 400 1 and 2 for the purpose of illustration only, each of which is preferably able to communicate through a different communication channel for the purpose of redundancy. Each of communication devices 400 1 and 2 communicates through a respective communication interface 402 1 and 2, as shown, with a processor 404. Processor 404 may optionally comprise other hardware and/or firmware components (not shown) and is able to process signals received through communication interfaces 402, indicative of communication from other local managers and/or from the central manager and/or from energy providing components as previously described. Processor 404 may optionally cause such information to be stored in a database 412 as shown.

Processor 404 also preferably operates a data analysis module 406 for analyzing the processed signals. The analyzed data is then preferably passed to a risk analysis module 408, which is optionally and preferably able to determine the likelihood that an emergency is occurring; and, if an emergency is not currently occurring, the likelihood that an emergency may occur in the near future (preferably determined as a time period ranging from a few seconds to a few minutes to a few hours to a few days). If risk analysis module 408 determines that an emergency is occurring or is likely to occur in the near future, then a policy implementation module 410 optionally and preferably determines which action(s) should be taken by local manager 104.

For example, if risk analysis module 408 determines that a gas leak or water leak is occurring at a fixed installation, as determined by a specific smart local energy installation, then policy implementation module 410 may optionally and preferably determine that local manager 104 should immediately direct that smart local energy installation to shut down the gas or water supply, or at least to issue a local alarm at the installation. The policy according to which policy implementation module 410 operates is optionally stored in database 412.

Risk analysis module 408 may also optionally determine more systemic risks, such as chronic grid overload in geographical area and/or in a particular section of the grid, which would again preferably be handled by policy implementation module 410.

Risk analysis module 408 and policy implementation module 410 may optionally be installed, additionally or alternatively, at the smart local energy installation, and perform similar functions at that location (not shown).

As described in greater detail below, local manager 104 may optionally be monitored and itself managed by a central monitoring facility such as central manager 102. Preferably, local manager can operates autonomously based on the analysis of risk analysis module 408 and the actions initiated by policy implementation module 410. This autonomous behavior may be optionally be initiated by local manager 104 in case of a loss of communication with the central monitoring facility or optionally following determination that communication with the central monitoring facility is not secure or optionally in cases where a local operator of local manager 104 elects to initiate autonomous operation. Figure 5 shows a schematic block diagram of another illustrative embodiment of a system for managing electricity provision according to the present invention, in which communications are configured according to a "cloud" network concept. In this concept, all of the previously described components are embedded in a non-hierarchical network, in which these components may optionally communicate with all other components. The communication network hardware may optionally be provided through these components or alternatively may optionally be separate from these components.

As shown, smart local energy installations 202, intelligent mobile energy vehicles 204 and central manager 102 are all in communication in a system 500, and are also addressable within system 500. No local managers 104 are shown as optionally, a specific smart local energy installation 202 takes on the role of local manager 104 for one or more smart local energy installations 202 and/or intelligent mobile energy vehicles 204. This role may optionally be passed between smart local energy installations 202 as necessary.

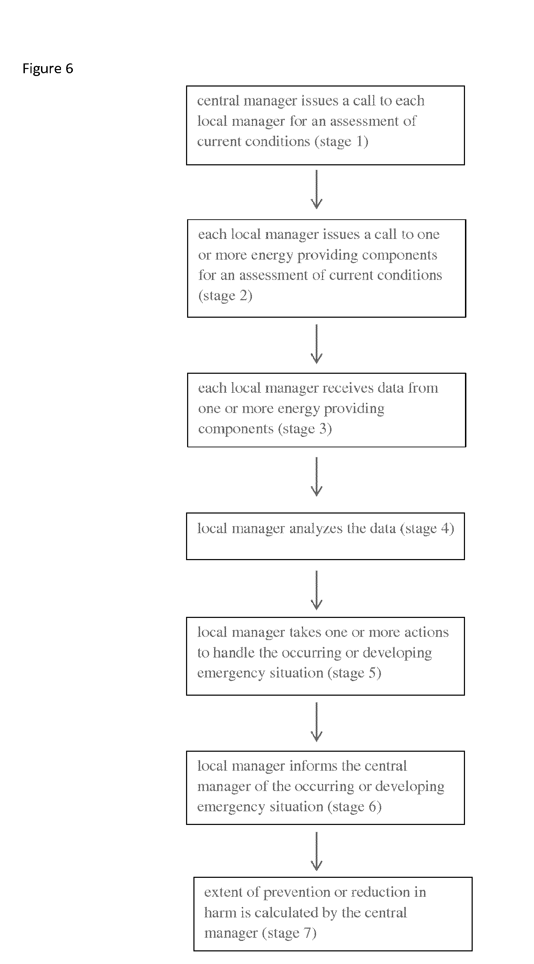

Figure 6 shows an exemplary, illustrative method for operating the system according to Figures 1 and/or 2D according to at least some embodiments of the present invention. As shown, in stage 1, the central manager issues a call to each local manager for an assessment of current conditions. Such a call is optionally and preferably issued periodically, for example and without limitation, every few seconds, every few minutes, every few hours and so forth. If no response is received from the local manager then optionally a period of missing data is recorded and the local manager is recorded as non-responsive, triggering an alarm condition. Optionally, if the system of Figure 2D is used, then the central manager issues the call to the gateway. In the subsequent stages described below, the gateway communicates with the central manager, while the local hub communicates with the energy providing components.

In stage 2, each local manager issues a call to one or more energy providing components with which that local manager communicates, again for an assessment of current conditions.

In stage 3, each local manager receives data from one or more energy providing components. As previously described, the type of data may optionally be different according to the type of energy providing component; for example, optionally and without limitation, intelligent mobile energy vehicles are able to provide information on road conditions, both in terms of regular use (traffic, condition of the road infrastructure in terms of potholes etc.) and also in terms of emergency conditions, such as natural disasters or terrorist attacks. Such data also preferably relates to grid conditions, including at least testing the physical infrastructure of the lines, determining which buildings have power, and so forth.

As another example, also optionally and without limitation, smart local energy installations are able to report on local fixed infrastructure conditions, optionally and preferably including both normal operation of such infrastructure but also regarding failures or breakage of such infrastructure, as well as for emergency conditions, such as natural disasters or terrorist attacks. For example and without limitation, smart local energy installations are able to monitor the normal operation of such infrastructure and to report any deviation from such normal operation, including but not limited to an increase or reduction in the availability of electricity, whether through the grid or through local production; an increase or reduction in water flow or pressure, or in gas or liquid fuel flow or pressure; an increase or reduction in temperature above or below normal thresholds (which may for example indicating the presence of fire or of freezing conditions); seismic activity, the status of physical infrastructure for transmitting any of the above materials; and the like.

As another example, also optionally and without limitation, the energy providing component of a mobile device such as device 110 reports on its status or may optionally provide environmental data based on the sensors within the device.

Both smart local energy installations and intelligent mobile energy vehicles preferably report normal operations, deviations from normal operation and emergency situations to their local manager. Alternatively, these simply report status and local managers determine whether deviations have occurred or whether emergency situations exist.

In stage 4, the local manager analyzes the data as previously described to determine whether an emergency situation is occurring or developing.

In stage 5, the local manager takes one or more actions to handle the occurring or developing emergency situation, if in fact one is occurring, for example by requesting shut down of infrastructure and/or local components at energy providing components.

In stage 6, the local manager informs the central manager of the occurring or developing emergency situation. Stages 5 and 6 may optionally be performed in a different order or may optionally be performed simultaneously. In cases where local manager is not able to communicate with the central manager, the local manager stores the data collected concerning normal operations, deviations from normal operation and emergency situations so that it may inform the central manager when communication is restored.

In stage 7, optionally the extent of prevention of the emergency situation, or reduction in harm of the emergency situation, is calculated by the central manager, in order to monetize this prevention or reduction in harm, for example through funds provided by an insurance company that would otherwise need to pay to repair sustained damages.

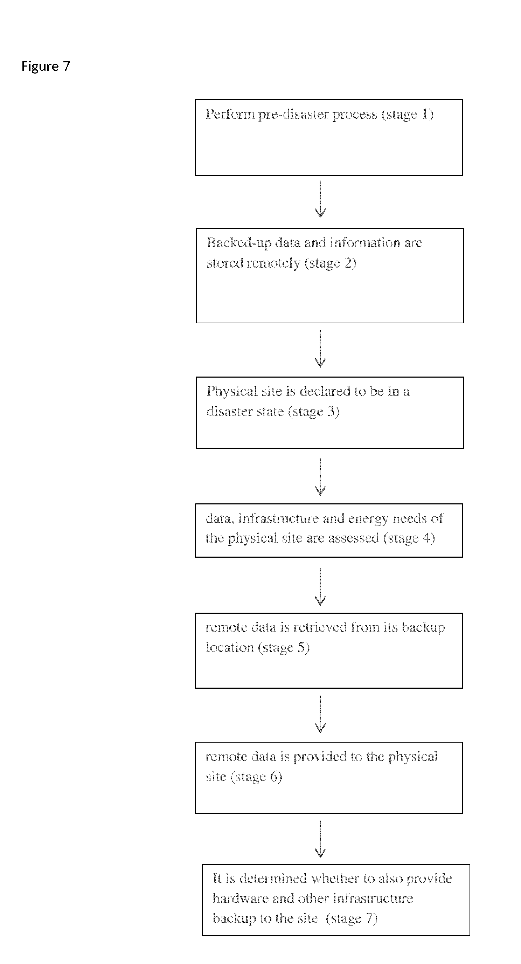

Figure 7 relates to an exemplary, illustrative method for complete disaster recovery, including both energy and data recovery, according to at least some embodiments of the present invention. At many sites, lack of data and lack of energy are the two biggest concerns for disaster recovery. The illustrative method provides a combined process for handling both of these concerns.

Turning now to Figure 7, in stage 1, a pre-disaster process is performed at a particular site (physical location), preferably including data backup. More preferably, the pre-disaster process also includes obtaining information regarding the energy consumption patterns of the site. Such historical information allows for abrupt changes in energy consumption, for example due to a disaster, to be detected. Energy quality is preferably reviewed, in terms for example of typical fluctuations in electrical energy or power obtained from the traditional electrical grid and/or renewable energy sources such as wind, solar, hydro, geothermal and so forth. More preferably, various sensors are present at the site and also at power lines leading to the site, in order to monitor such energy consumption and energy quality.

The data backup may optionally be performed virtually (for example through a computer network connection such as the Internet) or physically (through the connection of a mobile data storage device which is then removed from the physical site after the back-up). In any case, the backed up data is stored at a location that is remote from the physical site. The energy data is also preferably backed up and stored at a remote site, preferably one that is accessible to the central monitoring facility, in addition to be accessible locally by the local manager.

The pre-disaster process may also optionally comprise evaluating the hardware necessary for disaster recovery, at least for a minimum resumption of activities. Such hardware may optionally comprise computer hardware but may also optionally comprise telecommunications hardware, infrastructure hardware such as devices for providing water and so forth.

Stage 1 may optionally and preferably be performed more than once, and more preferably is performed regularly and periodically, for example optionally as part of a subscription based disaster recovery service.

Such data back-ups may optionally be performed by mobile energy providing components and/or may also optionally, additionally or alternatively, be performed through a local manager and/or local hub.

In stage 2, the backed up data and also optionally any other necessary information for disaster recovery, including but not limited to energy consumption patterns and the like, and any necessary hardware requirements for disaster recovery, are preferably stored remotely, more preferably at multiple locations.

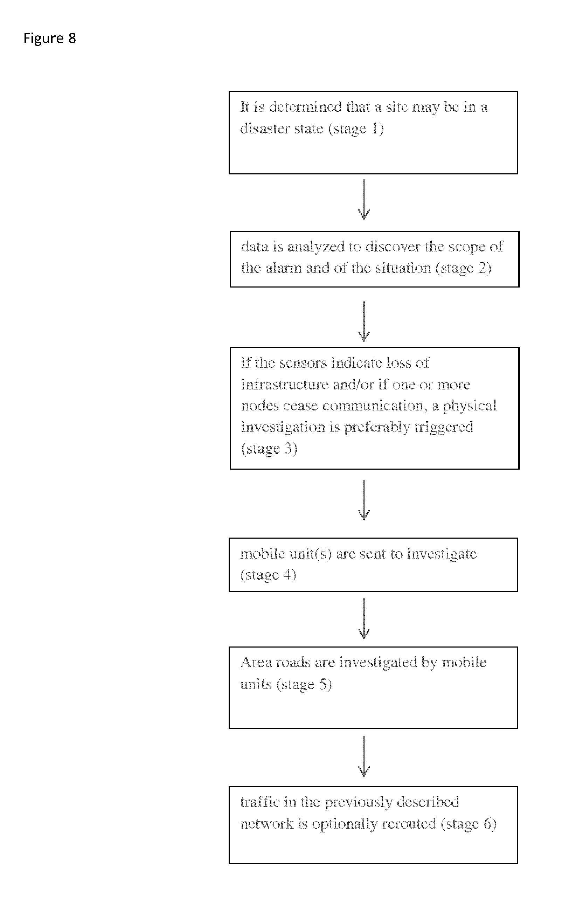

In stage 3, the site is declared to be in a disaster state. The disaster may optionally be highly local, only involving the site or a portion of the site, or alternatively may encompass a larger geographical area. Such a disaster state may optionally be determined manually or alternatively may be detected automatically, as described with regard to Figure 8 below.

In stage 4, the data, infrastructure and energy needs of the physical site are assessed, for example according to damage reports as described in more detail with regard to Figure 8 below.

In stage 5, the remote data is retrieved from its backup location.

In stage 6, the remote data is provided to the physical site. If the site is sufficiently undamaged, the data may optionally be provided virtually, for example through a computer network. Otherwise the data is provided through a physical connection to the site, more preferably by sending an intelligent mobile energy vehicle unit 204 (as previously described) to the site. The mobile unit 204 would preferably be provided with both data and energy backup, as typically it would be expected that energy backup would also be needed.

In stage 7, it is determined whether to also provide hardware and other infrastructure backup to the site; optionally stages 6 and 7 are performed together, optionally by the mobile unit 204 for example.

Figure 8 relates to an exemplary, illustrative method for disaster assessment, according to at least some embodiments of the present invention.

In stage 1, it is determined that a site may be in a disaster state, for example by having a disaster alarm triggered. The alarm may optionally be triggered manually, for example by a human report, but preferably is triggered through an assessment of data from sensors. For example, such data may optionally indicate a significant aberration in energy use, water use, liquid fuel, or gas use from historic patterns. Such data may also optionally indicate that part of the previously described network, comprising one or more nodes, unexpectedly ceases to communicate. Significant deviations in local behavior of sensors at one or more nodes or of one or more nodes themselves may also optionally trigger the alarm.

In stage 2, the data is analyzed to discover the scope of the alarm and also of the situation, for example whether it is restricted to one site (one node) or to a plurality of nodes, indicating a possibly wider geographical involvement.

In stage 3, if the sensors indicate loss of infrastructure and/or if one or more nodes cease communication, a physical investigation is preferably triggered.

In stage 4, preferably one or more mobile units (that is, mobile intelligent energy vehicles) are sent to investigate. These units may optionally already be in the area or may be sent from outside of the immediate geographic area considered to be involved in the disaster.

In stage 5, the roads around the geographic area considered to be involved in the disaster are investigated by the mobile units, to determine their physical state and whether the disaster area can be reached. Such an assessment may optionally be done automatically, for example, as the mobile units attempts to reach the disaster area.

In stage 6, traffic in the previously described network is optionally rerouted, for example through a combination of rerouting through physically fixed nodes and also through mobile nodes (which may optionally be instructed to change physical location to assist this process), in order to optimize communications, both of data and energy, during the disaster recovery process of Figure 7.

The various analysis and rerouting stages may optionally be performed by the local manager and/or the central manager as described above.

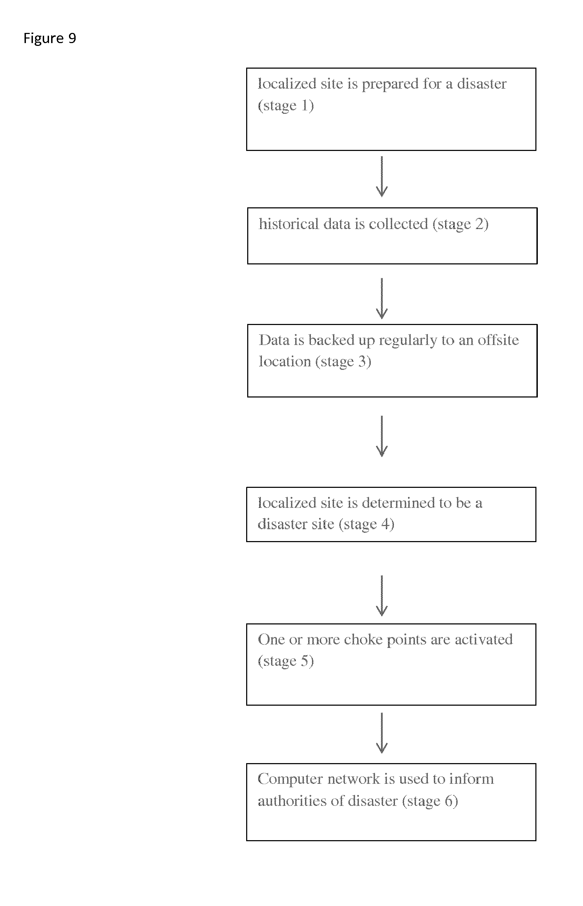

Figure 9 relates to an exemplary, illustrative method for local disaster recovery, according to at least some embodiments of the present invention.

In stage 1, a localized site is prepared for a disaster, for example by having detailed plans drawn up. These detailed plans include the location of any sensitive devices, pipes or other structures (for example the location of delicate and/or flammable equipment, hazardous materials, pipes for carrying various commodities, including but not limited to gas, natural gas, liquid fuel, water, hazardous chemicals and so forth, and the like), a description of the various rooms and their contents, and so forth. For a house, such plans also preferably include a description of the bedrooms, in case of a nighttime disaster. The plans also preferably relate to rescue plans and also plans required for putting out fires, stopping gas or chemical leaks, or otherwise handling any hazardous situations.

The plans also preferably relate to the mapping and installation of various "stop" or "choke point" locations, which can be used to stop the flow/transmission of various substances, including but not limited to solid particles, gases and liquids, including but not limited to gas, natural gas, liquid fuel, water, chemicals and so forth. Such choke point locations may also optionally relate to one or more electrical circuits. The choke points preferably divide the flow of substances and/or energy throughout a site into modules, which may then optionally and preferably be isolated from one another with regard to such flows in case of a disaster (as used herein, "disaster" may be equated with "emergency").

In stage 2, historical data is collected as described with regard to Figure 7 for example. Preferably, such historical data also includes data regarding patterns of usage and/or flows of the above substances. For example, water flow may be high during the week but low during the weekend at an office building, so that a deviation from this pattern may indicate a water pipe break.

In stage 3, optionally and preferably data is backed up regularly as previously described to an off-site location. For example, such data may optionally and preferably include status of bank accounts, personal information, information regarding any occupants of the site, and any locally stored information.

In stage 4, a localized site is determined to be a disaster site, which may for example optionally be performed as described with regard to Figure 8, including but not limited to having a fire, police, gas or flood alarm activated. However, unlike the method of Figure 8, for this method, the site is highly localized, for example to a single building or group of buildings.

In stage 5, one or more "choke points" are activated, for example and without limitation, to shut off one or more electrical circuits and/or the flow of one or more substances, such as one or more hazardous substances.

Optionally, if in stage 4 the site is not determined to be a disaster site, yet one or more alarms have been activated, for example to indicate a deviation from historical patterns of flow or consumption of one or more substances or energy, then the site may be contacted to indicate that this deviation has occurred. One or more users at the site may then optionally indicate whether the deviation is acceptable before a shut-off occurs. However, if at least one user cannot be contacted, or if contradictory instructions are received, then optionally and preferably a shut-off occurs automatically. Once the shut-off occurs, it may preferably in any case be overridden manually by an on-site user, and alternatively or additionally, optionally by an off-site user.

In stage 6, one or more disaster plans are invoked, for example to contact the necessary authorities, including a description of the various actions that have occurred so far, for example with regard to the activation of the choke points. Such contact preferably occurs automatically through one or more computer network connections directly to the necessary authorities.

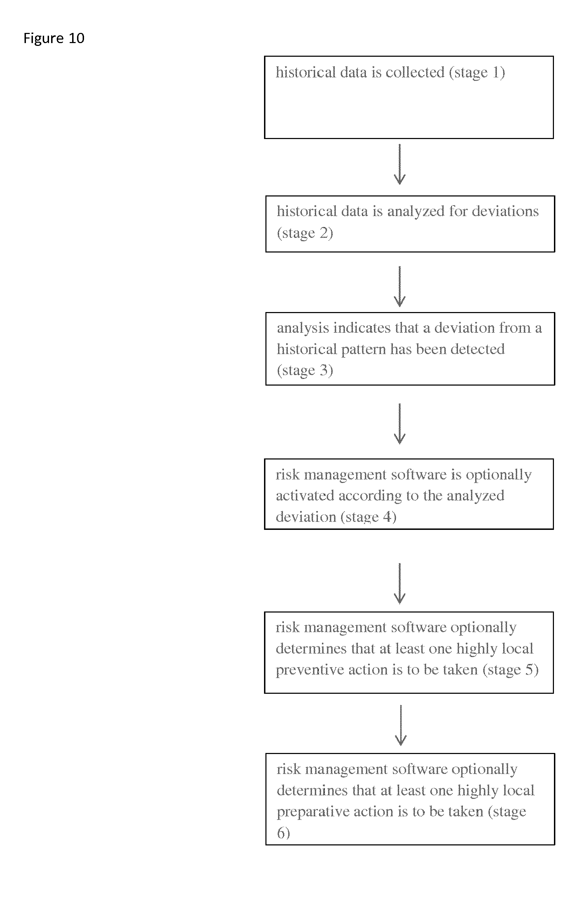

Figure 10 relates to an exemplary, illustrative method for analysis of historical data to indicate a potential disaster, according to at least some embodiments of the present invention.

In stage 1, historical data is collected as described herein. In stage 2, an analysis of the historical data indicates a significant deviation from a previously determined pattern, which either may be local or spread over a wider geographical area. By "local" it is meant limited to a 1 mile radius from a particular origin point; by "highly local" it is meant patterns only for that origin point.

In this non-limiting example, and to demonstrate both the analysis process and also application of the analyzed data to prediction activities, it is assumed that the origin point is a gas station that provides liquid fuel in the form of gasoline, and may also optionally charge electrical vehicles operating at least partially on batteries. Other optional activities may also be performed. In the case of a power failure, for example due to a failure of the electrical grid to provide electricity, the gas station would experience a loss of certain functions, unless back-up power were to be made available. These functions include but are not limited to lack of security (for example failure of cameras and surveillance equipment); inability to accept payment, due to failure of ATMs and credit card machines; inability to provide gas (electric pumps are required) or to charge electric vehicles; lack of lighting; and so forth.

Therefore, the analysis of historical data would preferably include at least an analysis of data from the gas station itself, regarding the use of electricity, gasoline, water and so forth. The analysis would also preferably include an analysis of the quality with which these items are provided, for example with regard to steady water pressure (as opposed to variable water pressure); steady, smooth provision of electricity (without spikes, surges or breaks in power); and so forth. Deviations, whether positive or negative, from the historical patterns could indicate a potential upcoming problem.

The analysis may optionally be performed by the local manager and/or by the central manager as previously described.

Next, in stage 3, the analysis indicates that a deviation from a historical pattern has been detected. This deviation is now analyzed to determine whether it represents a potential or actual threat, or whether it does not represent a threat, in order for suitable risk management to be performed. Factors that may optionally be used include but are not limited to the extent of the deviation (when considered alone and/or with regard to the historic levels of deviation see for a particular type of data); factors relating to time (including but not limited to seasonality, time of the week, time of day and so forth); and combinations of different types of deviations. If the deviation is considered to be an actual or potential threat, it is passed on to the next stage.

In stage 4, risk management software is optionally activated according to the analyzed deviation, if the deviation is shown to represent a potential or actual threat. As described in greater detail below, such risk management software is preferably implemented at the central monitoring facility, although agents or other local software entities may optionally be present at the local managers. Optionally, risk management software is provided in local managers so that these can analyze deviations and determine actions to be taken in cases where the communication to the central monitoring facility has been interrupted.

If the deviation represents an actual threat, then the software preferably causes one or more actions to be taken as described in greater detail below. If the deviation represents a potential threat, then a decision engine considers whether one or more actions are to be taken, for example based upon predetermined factors or alternatively according to learning from previous incidents.

In stage 5, the risk management software optionally determines that at least one highly local preventive action is to be taken. Such a preventive action may optionally include one or more of shutting down one or more electrical circuits, if one or more circuits are shown to have a potentially risky malfunction that could be dangerous; shutting down all or part of the plumbing/water delivery system; shutting down one or more pumps, or other parts of the gasoline delivery system; and so forth. Other preventive activities may optionally, additionally or alternatively, relate to activating one or more functions, such as activating one or more back-up power batteries so as to continue to provide lights, pumping, security and so forth.

Alternatively or additionally, in stage 6, the risk management software optionally determines that at least one highly local preparative action is to be taken. Such a preparative action may optionally include one or more of determining a reserve for back-up power batteries and for making certain that sufficient charging occurs through renewable and/or grid power to maintain such a reserve; being able to shut down one or more functions in response to a threat (for example, getting ready to shut off the pumps and hence to cease pumping gasoline in case a fire or other imminent threat is detected), so that if a shutdown is needed, it occurs in an orderly manner.

Similar systems could be provided in office buildings (for example to provide power to elevators, computers, HVAC and other systems), as well as for a factory, installations with hazardous materials, stadiums, hospitals, localized urban areas, remote installations, hotels, banks, airports, train stations, bus stations, stores, nuclear power plants, homes, other buildings, and other types of critical infrastructure.

Aa a further non-limiting example, to demonstrate both the analysis process and also application of the analyzed data to prediction activities as shown in figure 10, it is assumed that the energy providing component of a mobile device such as device 110 is monitored by a local manager. As above the energy providing component comprises at least a battery and BMS. In stage 1, historical data such as usage trends of the battery of the mobile device is collected as described herein.

In stage 2, an analysis of the historical data indicates a significant deviation from a previously determined pattern, such as a sudden discharge of the battery or unexpected communication with the BMS. Therefore, the analysis of historical data would preferably include at least an analysis of battery parameters and BMS activity. Deviations, whether positive or negative, from the historical patterns could indicate a potential upcoming problem. The analysis may optionally be performed by the local manager and/or by the central manager as previously described.

Next, in stage 3, the analysis indicates that a deviation from a historical pattern has been detected. This deviation is now analyzed to determine whether it represents a potential or actual threat, or whether it does not represent a threat, in order for suitable risk management to be performed. Factors that may optionally be used include but are not limited to the extent of the deviation (when considered alone and/or with regard to the historic levels of deviation see for a particular type of data); factors relating to time (including but not limited to seasonality, time of the week, time of day and so forth); and combinations of different types of deviations. If the deviation is considered to be an actual or potential threat, it is passed on to the next stage.

In stage 4, risk management software is optionally activated according to the analyzed deviation, if the deviation is shown to represent a potential or actual threat. As described in greater detail below, such risk management software is preferably implemented at the central monitoring facility, although agents or other local software entities may optionally be present at the local managers which, as described above, may be embedded on the mobile device. Optionally, risk management software is provided in local managers so that these can analyze deviations and determine actions to be taken in cases where the communication to the central monitoring facility has been interrupted. In such a case the risk management software would also be embedded in the device whether as hardware or software.

If the deviation represents an actual threat, then the software preferably causes one or more actions to be taken. If the deviation represents a potential threat, then a decision engine considers whether one or more actions are to be taken, for example based upon predetermined factors or alternatively according to learning from previous incidents.

In stage 5, the risk management software optionally determines that at least one highly local preventive action is to be taken. For example, in the case of a cyber-attack on a mobile device the communication of the device might be limited to the central manager only. Or, for example, rogue applications causing the battery to drain could be shut down.

Alternatively or additionally, in stage 6, the risk management software optionally determines that at least one highly local preparative action is to be taken. Such a preparative action may optionally include one or more of notifying the device user that malicious behavior was detected which has drained the battery and indicating the need to find a charging source.

Reference is now made to Figure 11, which is a simplified pictorial illustration showing a system 1100 for tracking, locating and recharging electric vehicles, in accordance with some demonstrative embodiments of the invention. Figure 11, shows several embodiments of the intelligent mobile energy vehicle 204 as well as an electric vehicle 1120 each connected to the central manager 102 via a communications network 1170.

Intelligent mobile energy vehicle 204 may include an electric land vehicle, an electric water vehicle and an electric air vehicle, which can fly.

The term "electric land vehicle" is meant herein to broadly include any vehicle which travels on land. Some non-limiting examples of electric land vehicles include an electric bicycle, an electric motorbike, an electric trolley, an electric car, an electric truck, an electric tram; an electric train, an electric emergency vehicle and an electric army vehicle.

The term "electric water vehicle" is meant herein to broadly include any vehicle which travels on/in water. Some non-limiting examples of electric water vehicles include an electric bike, an electric boat, an electric yacht, an electric ship, an electric hovercraft, an electric hydrofoil, an electric submarine, an electric emergency water vehicle and an electric army water vehicle.

The term "electric air vehicle" is meant herein to broadly include any vehicle which travels in the air, typically by flight. Some non-limiting examples of electric air vehicles include an electric glider, an electric airplane, an electric helicopter, an electric airship, an electric spaceship or shuttle, an electric rocket, an electric emergency air vehicle and an electric army air vehicle.

It should be understood that intelligent mobile energy vehicle 204 is adapted for travel in any form in any medium, and should not be construed as limited to the specific embodiments shown in the Figures or described above.

One embodiment of intelligent mobile energy vehicle 204 includes a master charger vehicle 1150. In general terms, each master charger vehicle 1150 is equipped with at least some of the following:
a) a master battery module 1152;
b) a power converter 1154;
c) a power connection and transfer module 1155;
d) a vehicle positioning system 1124;
e) a master battery module management system 1156;
f) a mobile device 1122; and
g) a communication display 1158.

Master charger vehicle 1150 is also equipped with independent locomotive means for independent motion of master charger vehicle 1150. Such independent locomotive means may optionally comprise one or more engines for example. For land travel for example, such engine(s) would optionally and preferably be connected to, and would power the movement of, one or more wheels, treads or other suitable devices for contacting the ground and for enabling locomotive movement of master charger vehicle 1150. For water travel, a propeller or other suitable water travel device would optionally and preferably be connected to the one or more engines.

In some cases, the master charger vehicle 1150 is equipped with all of the above. Most master charger vehicles 1150 have associated therewith at least one person, who is a service provider 1104, trained to provide at least some the services associated with the intelligent mobile energy vehicle 204 described herein. Each service provider may have at least one additional mobile device 1170 for communications with the central manager 102 and/or a user 1102 of electric vehicle 1120.

Electric vehicle 1120 comprises at least some of the following:
a) a battery management system 1121;
b) a mobile positioning device 1122;
c) a battery alarm system 1123;
d) a vehicle positioning system 1124;
e) a motor 1126;
f) a display 1127;
g) an electric battery pack 1128, wherein movement of the electric vehicle is powered exclusively by the electric battery pack 1128; and
h) a charger connector 1129, which optionally and preferably comprises a fast charging socket 1133.

According to some embodiments, vehicle 1120 comprises all of the above.

Electric vehicle 1120 comprises at least one battery pack 1128. The size of the battery pack depends on the weight of the vehicle, motor size etc.

Some examples of typical battery pack sizes appear in Table 1 hereinbelow.

**Table 1. Typical Battery sizes for different sizes of electric vehicle**

| **Vehicle type** | **Vehicle weight (ton)** | **Motor size [HP]** | **Battery size range [kWh]** | **Distance range before charging [km]** |
|---|---|---|---|---|
| Motorbike e.g. Electric Motorsport | 0.15 - 0.30 | 10 - 100 | 1.5 - 7 | 50 - 100 |
| GPR-s | 0.18 | 19 | 3.3 | 70 |
| Small car e.g. Mitsubishi | 0.80 - 1.50 1.10 | 35 - 100 | 7 - 25 | 50 - 150 |
| i-MiEV | | 64 | 16 | 110 |
| Estate car | 1.50 - 2.80 | 75 - 350 | 14 - 50 | 80 - 300 |
| e.g. | 2.02 | | | |
| BYD e6 | | 100 - 272 | 16 - 48 | 90 - 300 |
| 4 x 4 jeep 4x4 e-Jeep | 2.0 - 4.0 | 120 - 400 | 16 - 60 | 80 - 350 |
| 15 seater minibus e.g. Smith Electric | 3.5 - 5.0 | 100 - 300 | 20 - 70 | 80 - 300 |
| Vehicles Edison LWB | 4.3 | 122 | 50 | 200 |
| 60 seater bus | 18 - 30 | 250 - 600 | 30 - 150 | 70 -300 |
| Truck e.g. Smith | 8 - 30 | 120 - 500 | 50 - 200 | 90 - 350 |
| Electric Vehicles Newton 12t | 12 | 163 | 80 | 160 |

One embodiment of intelligent mobile energy vehicle 204 includes a breakdown vehicle 1130. It should be understood that though one non-limiting embodiments of the breakdown vehicle is shown in Figure 11, for land travel, the same functions can be provided for water and air. In general terms, each breakdown vehicle 1130 is equipped with at least some of the following:
a) a master battery module 1132;
b) a power converter 1134;
c) a power connection and transfer module 1135;
d) a vehicle positioning system 1124;
e) a master battery module management system 1136;
f) a mobile positioning device 1122; and
g) a communication display 1138.

In some cases, the breakdown vehicle is equipped with all of the above. Most breakdown vehicles have associated therewith at least one person, who is a service provider 1104, trained to provide at least some the services associated with the intelligent mobile energy vehicle 204 described herein.

Breakdown vehicle 1130 is further constructed and configured to perform at least one of the following:
a) tow at least one electric vehicle 1120 using a tow line and connection module 1139;
b) carry and transport at least one electric vehicle 1120. This typically involves a ramp 1137 or lifting system and a clamp system 1138 for clamping the electric vehicle whilst on board the breakdown vehicle;
c) test the battery pack of the electric vehicle 1120 and/or other elements thereof whilst on board the breakdown vehicle; and
d) charge the battery pack of the electric vehicle 1120 whilst on board the breakdown vehicle via power connection and transfer module 1135 from master battery module 1132.

In some embodiments, breakdown vehicle 1130 is constructed and configured to perform three of the four above functions.

In some embodiments, breakdown vehicle 1130 is constructed and configured to perform all of the four above functions.

In some embodiments, breakdown vehicle 1130 is constructed and configured to perform functions associated with intelligent mobile energy vehicle 204 described herein.

Central manager 102 is in at least one of direct and indirect communication with stationary service station 1140.

System 1100 further comprises a positioning network system 1160 adapted to provide real-time positions of at least one of:
a) at least one electric vehicle 1120;
b) at least one mobile device 1170 associated with user 1102;
c) at least one mobile device 1170 associated with service provider 1104;
d) at least one master charger vehicle 1150;
e) at least one stationary service station 1140; and
f) at least one breakdown vehicle 1130.

Positioning network system 1160 is further constructed and configured to provide the control center with real-time positions, typically superimposed on a map, of at least one of:
a) the at least one electric vehicle 1120;
b) the at least one mobile device 1170 associated with user 1102;
c) the at least one mobile device 1170 associated with service provider 1104;
d) the at least one master charger vehicle 1150;
e) the at least one stationary service station 1140; and
f) the at least one breakdown vehicle 1130.

Central manager 102 is in at least one of direct and indirect communication with positioning network system 1160.

Positioning network system 1160 may comprise, for example, a network of satellites in a global satellite navigation system (e.g., GPS, GLONASS, Galileo, etc.), a network of beacons in a local positioning system (e.g., using ultrasonic positioning, laser positioning, etc.), a network of radio towers, a network of Wi-Fi base stations, and any combination of the aforementioned positioning networks. Furthermore, the positioning system 1160 may include a navigation system that generates routes and/or guidance (e.g., turn-by-turn or point-by-point, etc.) between a current geographic location of the electric vehicle and a destination, as was described in US Patent Application Publication No. 20100094496, incorporated herein by reference.

Central manager 102 is in at least one of direct and indirect communication with a payment system center 1180. Payment center may comprise at least one computer system 1119. The payment system center is constructed and configured to charge users of an electric vehicle 1120 for at least one of:
a) charging an on-board battery pack 1128 by a master charger vehicle 1150;
b) charging on-board battery pack 1128 by a breakdown vehicle 1130;
c) charging on-board battery pack 1128 at a stationary service station 1140;
d) testing an on-board battery pack 1128 by master charger vehicle 1150;
e) testing an on-board battery pack 1128 by master charger vehicle 1150;
f) testing an on-board battery pack 1128 by breakdown vehicle 1130;
g) providing other services by breakdown vehicle 1130;
h) providing other services at stationary service station 1140; and
i) providing other services by a master charger vehicle 1150.

Some typical charging time ranges from the master charger vehicle to the electric vehicles are provided in Table 2.

**Table 2 Typical Battery Charging times for different sizes of electric vehicle**

| **Vehicle type** | **Battery size range [kWh]** | **Time range required to charge battery from master charger vehicle min** | **C rate** | **Time range required to charge battery from breakdown vehicle min** | **C rate** |
|---|---|---|---|---|---|
| Motorbike | 1.5 - 7 | 10 - 720 | 0.20 - 3 | 10 - 720 | 0.20 - 3.0 |
| Small car | 7 - 25 | 10 - 720 | 0.20 - 3 | 10 - 720 | 0.20 - 3.0 |
| Estate car | 14 - 50 | 20 - 720 | 0.20 - 3 | 20 - 720 | 0.20 - 3.0 |
| 4 x4 jeep | 16 - 60 | 20 - 720 | 0.20 - 3 | 20 - 720 | 0.20 - 3.0 |
| 15 seater minibus | 20 - 70 | 25 - 720 | 0.20 - 3 | 25 - 720 | 0.20 - 3.0 |
| 60 seater bus | 30 - 150 | 40 - 720 | 0.20 - 3 | 40 - 720 | 0.20 - 3.0 |

According to at least some embodiments of the present invention, the connection and transfer module 1155 of the master charger vehicle 1150 further comprises a fast charging transfer device (not shown). As previously described, the charger connector 1129 of the electric vehicle 1120 further comprises a fast charging socket 1133, such that the connection and transfer module is adapted to transfer said input power from the electricity converter module of the master charger vehicle 1150 to at least one battery 1128 of the electric vehicle 1120 through fast charging.

Optionally 70-100% of said battery 1128, disposed inside said electric vehicle 1120, is charged by said master charger vehicle 1150 within one hour. Also optionally and preferably 70-100% of said battery 1128, disposed inside said electric vehicle 1120, is charged by said master charger vehicle 1150 within 20 minutes, more preferably within 10 minutes and most preferably within 5 minutes, through said fast charging transfer device to the fast charging socket 1133 and hence to at least one battery 1128 .

Master charger vehicle 1150 may optionally be any type of vehicle and may optionally comprise a standard vehicle which is then retro-fitted with a charger module. The charger module optionally comprises master battery module 1152, electricity converter module 1154 adapted to convert output power from said master battery module to input power suitable for provision to said at least one battery, and a connection and transfer module 1155 adapted to transfer said input power from the electricity converter module to at least one battery. The separate charging module is suitable for retrofitting the standard vehicle and is preferably independent of the vehicle manufacturer or vehicle model.

Reference is now made to Figure 12A, which is a simplified block diagram 1200 showing further details of intelligent mobile energy vehicle 204 in accordance with some embodiments of the present invention.

The intelligent mobile energy vehicle 204 may comprise one or more or all of the following components:
a) an air-water generator system 1210;
b) a wind turbine energy system 1280;
c) a solar energy system 1290; and
d) an energy transformer system 1292.

An air-water generator system 1210, may be a system such as that described in US Patent 7,722,706 or in US Patent Application Publication No. 2009151368A1, incorporated herein in its entirety by reference, or any other air-water generator system known in the art.

Wind turbine system 1280 may be any suitable wind turbine system known in the art, such as that described in US7709972.

Solar energy system 1290 may be any suitable solar panel system suitable for a vehicle, such as that described in US Patent Application Publication No.US2007261896 A1 or the system of US7469541.

Master battery module 1152 may be charged from an electricity grid 1295 via transformer system 1292. Additionally or alternatively, module 1152 may receive some or all of its power from solar system 1290 and/or wind turbine system 1280.

Master battery module 1152 is controlled by a master battery management system 1156 and sensors 1206, in communication via a sensor module 1204 with an integration and service coordination bus 1202. Bus 1202 is constructed and configured to receive inputs and outputs from a user interface 1220, manned by service provider 1104, a power control system 1156, which manages power from the battery management system and a power provision system 1260, as well as from the solar system 1290 and wind energy system 1280.

Master battery module 1152 is connected to power connection and transfer module 1155, which is in turn connected to fast charging transfer device 1167 (not shown). Power control system 1156 preferably controls whether fast charging or fast discharging occurs, and more preferably controls the rate of such charging or discharging, as described with regard to the exemplary method of Figure 12B. Optionally, center manager 102 may direct power control system 1156, for example with regard to whether charging or discharging occurs, and/or with regard to the rate of such charging or discharging. Control center 1110 may also optionally override any function of power control system 1156, for example with regard to charging or discharging.

According to some embodiments, the intelligent mobile energy vehicle comprises all of the aforementioned systems. Depending on the systems on board intelligent mobile energy vehicle 204, the transformer system 1292 will be built to enable power transfer from these systems to master battery module, as is known in the art.

An air conditioning system 1270 may be selected from a standard vehicle air conditioning system as is known in the art, a solar air conditioning system as described in US2010031682A or WO08114266 and may be integrated with the air-water generator.

The air water generator may condense and/or extract water from air. The collected water is stored in a water tank 1212, enabling the intelligent mobile energy vehicle to provide water to electric vehicles 1120 (Figure 1) as may be required, from a water provision service 1214, as well as providing the water requirements of the master vehicle. Additionally, the water may be used in the air conditioning system 1270.

Bus 1202 also coordinates information from positioning system 1124, a tow and load module 1240 and a communication module 1250.

Bus 1202 communicates information regarding the services provided by the intelligent mobile energy vehicle to the electric vehicle to central manager 102. For example, the services may include, but are not limited to, battery pack 1128 charging, battery pack testing, water provision, towing services and other services.

Bus 1202 also receives information from the central manager via communication module 1250 regarding electric vehicles requiring servicing. The information may include, user data, location, battery status, other service requirements, user payment status and the like.

Figure 12B relates to an illustrative, exemplary, non-limiting embodiment of a method for fast charging or discharging, in which the fast charging or discharging is directed by a central manager. The method in this embodiment relies upon the provision of a central manager for communicating with the intelligent mobile energy vehicle and the electric vehicle, in addition to the components of the method of Figure 3B. For the purpose of description only, the communication center is assumed to be part of the central manager but it may also optionally be separate from the central manager.

In stage 1, an electric vehicle is determined to be in need of fast charging or discharging by the central manager, which also preferably determines the urgency of such a need as previously described. The central manager also preferably prioritizes between a plurality of such needs for electric vehicles as previously described.

The central manager preferably receives periodic information about the state of the battery and of the electric vehicle, for example, according to internal monitoring of its battery by the power control system. The power control system preferably provides this information to the central manager through the communication device of the electric vehicle. Communication between the central manager and the electric vehicle is preferably established according to a handshake protocol with the communication center as previously described, which in turn communicates with the central manager.

The central manager also optionally collects such monitoring data and stores such data, optionally for further analysis (for example to determine intelligent mobile energy vehicle deployment, energy efficiency of the electric vehicles and so forth).

In stage 2, once fast charging or fast discharging has been determined, the central manager selects a intelligent mobile energy vehicle to respond to the need of the electric car and initiates communication with the intelligent mobile energy vehicle, optionally through the communication center as previously described.

In stage 3, the intelligent mobile energy vehicle receives the request of the central manager, whether directly or through the communication center, and moves toward the electric vehicle.

In stage 4, the intelligent mobile energy vehicle and the electric vehicle meet at the same location and initiate charging or discharging as previously described.

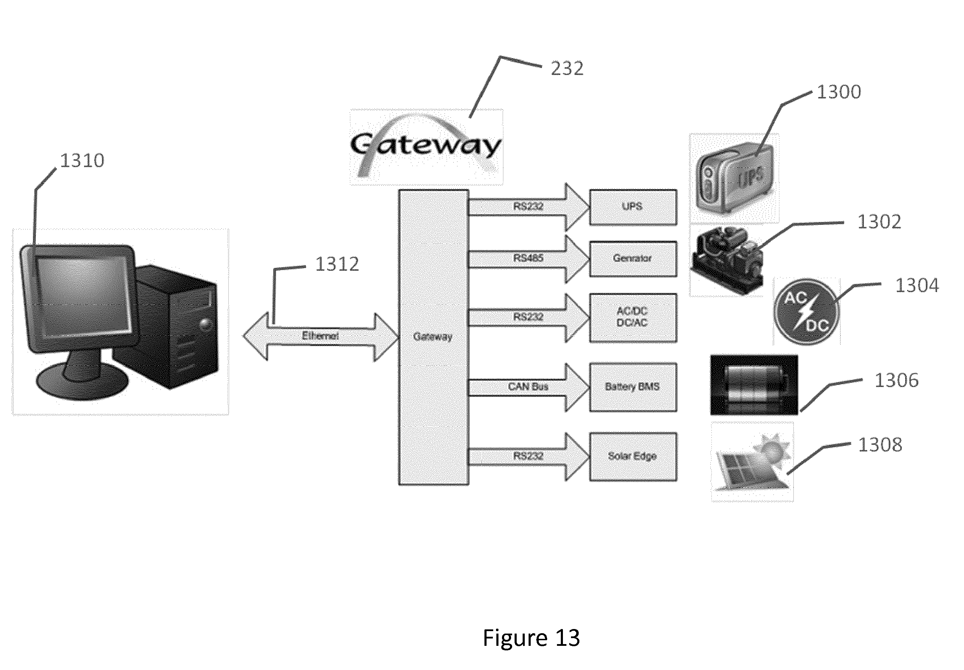

Reference is now made to Figure 13, which is a simplified pictorial illustration describing collection of data by the gateway 232 (of Figure 2D) from a range of power sources in accordance with a detailed embodiment of the present invention.

As shown gateway 232 gathers data from a plurality of energy generating components using a plurality of industry standard communication protocols (shown here for the purpose of illustration only and without any intention of being limiting). The required hardware components for communication according to such protocols are not shown as they are well known in the art. Energy generating components include but are not limited to uninterruptible power supplies (UPS) 1300, generators 1302, an AC/DC converter 1304 for connecting to the electricity grid (not shown), battery management systems (BMS) 1306, and solar power installations 1308. Protocols used include but are not limited to RS232 (for example for connecting to UPS 1300, an AC/DC converter 1304 for connecting to the grid (not shown) and solar power installations 1308), RS485 (for example for connecting to generator 1302), and CAN bus (for example for connecting to battery management systems (BMS) 1306). Additional protocols can be used or supported using specially created driver software. Data gathered includes but is not limited to power generated, alarm conditions and device status.

One or more computer systems 1310 connect to the gateway 232 over a computer network 1312, which may optionally comprise an Ethernet network as shown, or alternatively may be any of the communication networks described with reference to figure 2D above, allowing the computer operator (not shown) to view the data gathered by the gateway 232 from the energy generating components. Computer systems 1310 may be a part of central manager 102. Optionally, computer systems 1310 accesses gateway 232 using a web browser or other zero or low footprint client, and gateway 232 includes a web server. Preferably the computer operator is able to perform local maintenance and provisioning tasks related to gateway 232 and its connected energy generating components in addition to viewing data gathered by gateway 232.

Optionally, gateway 232 is provided with a local maintenance and monitoring interface (not shown) that provides the same functionality as that provided to the computer operator. As a non-limiting example, the interface may be in the form of a display and keyboard that are part of the gateway.

Preferably access to the gateway by either computer systems 1310 or local interface is protected by password or other such authentication means to prevent tampering or sabotage.

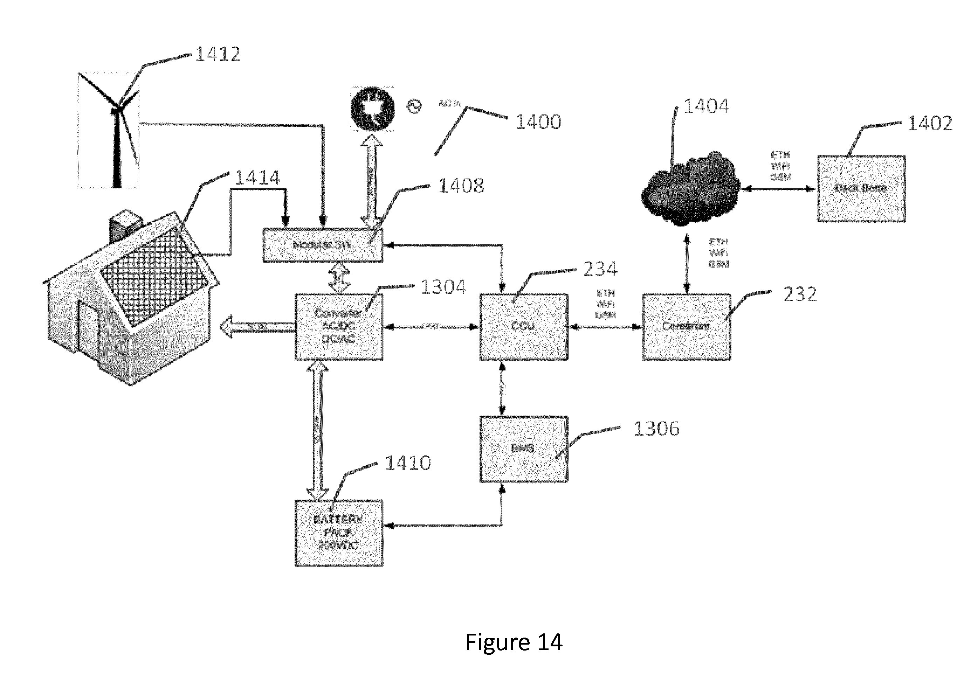

Reference is now made to Figure 14, which is a non-limiting simplified pictorial illustration describing an energy management system 1400 through the interaction of several of the systems described above, according to at least some embodiments of the present invention.

As shown, a central manager (backbone 1402) is connected to a communications network (shown as a cloud 1404 for the purpose of illustration only and without meaning to be limited in any way) using a range of industry standard communication protocols and the accompanying hardware (not shown). One gateway 232 (Cerebrum) or several gateways (not shown) are also connected to the communications network 1404 allowing communication between the gateways 232 and the central manager 1402. Such connections allow central manager 1402 to manage energy at the various components, gateways 232, and an energy consumer 1414, which may optionally be a building as shown.

The gateway 232 is connected to a local hub 234 (CCU) using industry-standard communication protocols that may include but are not limited to an Ethernet, WiFi, or GSM cellular network, as well as the accompanying hardware (not shown). The gateway 232 may be connected to a plurality of local hubs (not shown).

The local hub 234 in turn is connected to several energy generating components as well as components allowing control of the energy generating components using industry-standards protocols. As shown these may include but are not limited to: battery management system (BMS) 1306 connected to a battery 1410, AC to DC and DC to AC converter 1304, a modular switch 1408 that can be directed by the local hub 234 to switch the energy supply source from a plurality of energy generating components. As shown these may include but are not limited to solar panels on the roof of energy consumer 1414, wind powered turbine 1412, or electricity grid (not shown, connected through converter 1304). Energy consumer 1414 receives power from the AC/DC DC/AC converter 1304, which may optionally connect to battery 1410.

The local hub 234 gathers data from the connected energy generating components and communicates this information to the gateway 232 which in turn communicates the data to the central manager 1402. Data gathered includes but is not limited to power generated, alarm conditions and device status.

Gateway 232 or central manager 1402 may optionally direct the local hub 234 to make changes to the energy source used or disconnect power to energy consumer 1414 via the modular switch 1406 based on local or network-wide factors including but not limited to battery charge status, time of day, availability of cleaner energy source, failure of energy sources, or alarm conditions such as overheating of an energy source.

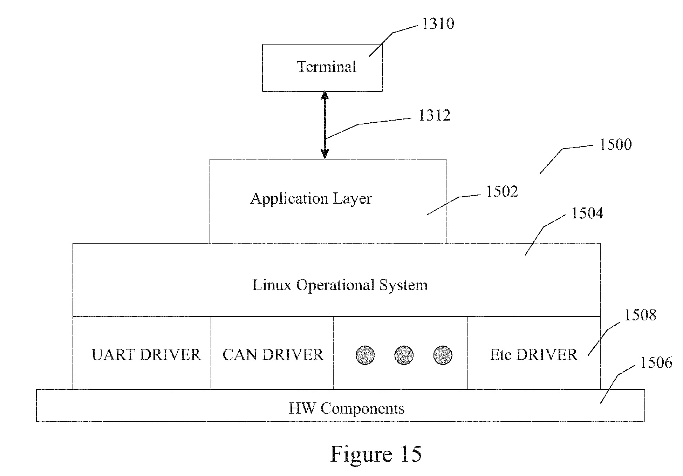

Figure 15 shows a schematic block diagram which is a simplified software topology 1500, of the gateway 232 or local hub 234, shown as connected to a computer (terminal), according to at least some embodiments of the present invention.

The computer (terminal) of Figure 13 connects to the gateway 232 over computer network 1312, again shown as Ethernet network, allowing the computer operator to view the data gathered by the gateway 232 from the energy generating components.

Software topology 1500 within the gateway 232 or local hub 234 includes at least three layers. An application layer 1502 directs the functionality of the gateway 232 or local hub 234 which is described in reference to Figure 2D. An operating system 1504 enables the control of the hardware components 1506 by the application layer 1502. The operating system 1504 may optionally be Linux or any other operating system suited to the hardware 1506 used according to these embodiments of the present invention. The operating system 1504 interfaces to the driver layer 1508 which includes software adapted to a plurality of industry-standard protocols for communication with hardware components including energy generating components as well as energy control components such as the modular switch of Figure 14.

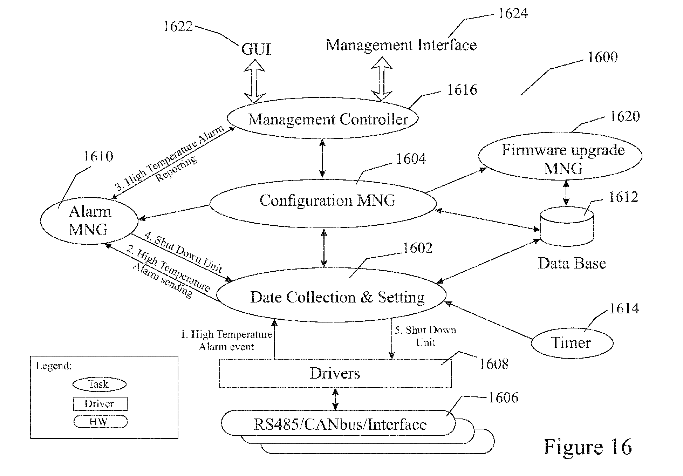

Reference is now made to Figure 16, which is a simplified functional software architecture 1600, according to at least some embodiments of the present invention.

The functional and logic blocks in architecture 1600 described may optionally be incorporated into the gateway 232 or local hub 234 or distributed between these components.

A data collection and setting function 1602 is operative to collect data from energy generating and energy controlling components and also to direct these components to change their mode of functioning. For example the modular switch of Figure 14 could optionally be directed to direct power from different energy sources. The data collection and setting function 1602 communicates to the energy generating and energy controlling components using software drivers 1608 adapted for communication using a plurality of industry-standard communication protocols through hardware 1606. The data collection and setting function 1602 preferably transfers data collected to other functional blocks such as the configuration manager 1604 and alarm manager 1610, and stores collected data in the database 1612.

The alarm manager 1610 is operative to collect alarms from energy generating and energy controlling components and to perform analysis of these alarms and optimally to instruct one or more energy providing components to perform some action on the basis of the received alarm.

The timer function 1614 is operative to provide a standard time of day to all devices across the network and to keep these devices synchronized.

A management controller 1616 is operative to provide an interface to the central manager as well as to a computer operator as described in Figure 13.

Turning back to configuration manager 1604, this component is operative to gather data from the data collection and setting function 1602, as well as instructing the data collection and setting function 1602 about data that should be gathered or instructions that should be transferred to energy generating devices. Additionally the configuration manager 1604 accepts instructions from the management controller 1616 and transfers data collected to the management controller 1616. Further, the configuration manager 1604 provides the alarm manager 1610 with instructions defining the reaction to any alarm received by the alarm manager 1610. The configuration manager 1604 records all activity including but not limited to instructions, alarms, and historical energy production data in the database 1612.

The firmware upgrade manager 1620 is operative to store current and new firmware versions in the database 1612 according to instructions received from the configuration manager 1604. Optionally, firmware upgrades are initiated locally as via GUI 1622. Optionally, configuration manager 1604 may receive firmware upgrades from the central manager (not shown), via management interface 1624. Preferably, the upgrades are provided with verification means so that they can be verified as authentic firmware upgrades that have not been tampered with or in any way modified so that gateway 232 or local hub 234 are protected from sabotage. Firmware upgrades that cannot be verified by firmware upgrade manager 1620 are discarded.

In a non-limiting example as shown in Figure 16, a high temperature alarm is received by the data collection and setting function 1602 from one of the connected energy generating devices (not shown). The data collection and setting function 1602 transfers the alarm to the alarm manager 1610. The alarm manager 1610 simultaneously instructs the affected energy generating device to shut down (via the data collection and setting function 1602) and notifies the management controller 1616 about the received alarm. Now management controller 1616 can cause the alarm to be displayed on the computer (of Figure 13), for example through a GUI 1622, and may also relay the alarm information to the central manager (not shown, optionally access through a management interface 1624 as shown). The data collection and setting function 1602 transfers the instruction to shut down to the affected device.

The references cited herein teach many principles that are applicable to the present invention. Therefore the full contents of these publications are incorporated by reference herein where appropriate for teachings of additional or alternative details, features and/or technical background.

It is to be understood that the invention is not limited in its application to the details set forth in the description contained herein or illustrated in the drawings. The invention is capable of other embodiments and of being practiced and carried out in various ways. Those skilled in the art will readily appreciate that various modifications and changes can be applied to the embodiments of the invention as hereinbefore described without departing from its scope, defined in and by the appended claims.

## Claims

1. A system for energy management of at least one mobile device, comprising: a local manager; and at least one energy providing component in communication, in which said at least one energy providing component and said at least one local manager are embedded in said at least one mobile device, wherein said at least one energy providing component provides energy to said at least one device; wherein said at least one local manager intercepts and analyses all communications to or from said at least one energy providing component.

2. The system of claim 1, wherein, following said interception and analysis, said at least one local manager blocks any malicious communication to or from said at least one energy providing component.

3. The system of claims 1 or 2 wherein said communication may come from an application on said device or may originate from a source not on said device.

4. The system of any of the above claims wherein said at least one local manager monitors said at least one energy providing component to determine an energy status of said at least one energy providing component. wherein said monitoring comprises one or more of determining an activity status; whether an alarm condition exists; determining an amount of energy provided by said energy providing component; determining charging and discharging status of said energy providing component, and recording behavior of the energy providing component.

5. The system of claim 4 wherein said at least one local manager determines that said energy status represents an alarm condition or attack on said energy providing component.

6. The system of claim 5 wherein following determining an alarm condition or an attack, said local manager takes action to protect said energy providing component.

7. The system of claim 5 further comprising a central manager and wherein said local manager reports said alarm or said attack to one or both of said central manager and/or to the owner and/or user of said mobile device.

8. The system of claim 7, wherein said communication between said central manager and said at least one local manager is encrypted and/or uses the communications networks supported by the mobile device.

9. The system of claims any of claims 4-8 wherein said at least one local manager retains historical data for said energy status of said energy providing component and wherein said at least one local manager analyzes said historical data to determine whether a current energy status represents a deviation from said historical data.

10. The system of any of claims 7-9, wherein said at least one local manager transmits said current energy status and said historical data to said central manager, and wherein said central manager analyzes said historical data to determine whether a current energy status represents a deviation from said historical data.

11. The system of any of the above claims, wherein said at least one energy providing component comprises a battery and a battery management system.

12. The system of any of the above claims wherein said embedding of said local manager comprises at least one of: embedding in said hardware of said device; embedding code in the operating system of the said device; or embedding an application running on said device.

13. The system of any of claims 7-12, wherein said mobile device detects local environmental conditions using the sensors built into said device and provides information about said environmental conditions to the local manager or central manager.

14. The system of any of the above claims wherein said mobile device comprises at least one of a laptop, smartphone, cellphone or vehicle.

15. A method for energy management of at least one mobile device, comprising:
a. providing a local manager; and at least one energy providing component in communication, wherein said at least one energy providing component and said at least one local manager are embedded in said at least one mobile device, wherein said at least one energy providing component provides energy to said at least one device;
b. intercepting and analyzing by said at least one local manager of all communications to or from said at least one energy providing component; and
c. blocking by said local manager of any malicious communication to or from said at least one energy providing component.
